# EUROPEAN PATENT SPECIFICATION

(11) **EP 1 990 358 B1**
(45) Date of publication and mention of the grant of the patent: **13.06.2018**
(21) Application number: 07009440.4
(22) Date of filing: 10.05.2007
(51) Int. Cl.: C08G 69/48, C08G 81/00

(54) **Co-polymer of a modifed polyamide and a polyether**
Kopolymer eines modifizierten Polyamids und Polyether
Copolymère d'un polyamide modifié et d'un polyéther

(43) Date of publication of application: 12.11.2008
(73) Proprietor: Abbott Laboratories Vascular Enterprises Limited, Terrace, Dublin 2 (IE)
(72) Inventor: Lorenz, Günter Dr., 72072 Tübingen (DE)
(74) Representative: Peters, Hajo

(56) References cited:
- EP-A- 1 783 156
- GB-A- 551 820
- GB-A- 803 559
- GB-A- 1 329 032
- US-A- 5 216 087
- DATABASE WPI Week 198813 Derwent Publications Ltd., London, GB; AN 1988-087244 XP002455882 & JP 63 037125 A (MITSUI PETROCHEM IND CO LTD) 17 February 1988 (1988-02-17)
- DATABASE WPI Week 198224 Derwent Publications Ltd., London, GB; AN 1982-49753E XP002456251 & SU 857 161 B (MIGACHEV G I) 26 August 1981 (1981-08-26)

## Description

### Field of the invention

The present invention refers to modified Co-Polymers having high flexibility and high stress resistance, especially tensile strength or tear resistance, in addition to the good physical characteristics of the known Block-Co-Polymers of a polyamide and a polyether, either polyether diol or polyether diamine.

### Background of the invention

Block-Co-Polymers of a polyamide and a polyether have been used in the polymer industry for a long time and - due to their enormous range of possible applications - are found in many branches of industrial products. Recently in the area of medicinal devices good use has been made of these materials especially in implants. The most popular Block-Co-Polymer of a polyamide and a polyether used in this field is PEBAX™, besides the polyamides, which include different sorts of Nylons. Even though these materials have certainly been used successfully, due to the strains put on the materials and the necessity to improve their characteristics in the light of growing experience coming from increasing numbers of treated patients, there clearly is a need for improved materials/elastomers allowing for an effective treatment of the patient preferably with an economical production process.

JP 63 037 125 A of MITSUI PETROCHEM IND CO LTD published 17 February, 1988 is drawn to modified polyamide based elastomers from a polyamide component, a polyether component and a cis-type fatty acid dicarboxylic acid or derivative thereof, mentioning only non-substituted carboxylic acids.

US 5,216,087 from the Korean Institute of Science and Technology published 01 June, 1993 is describing a process for preparing a polyethyleneoxide-substituted polymer having improved blood compatibility.

EP 1 783 156 of ARKEMA FRANCE published 09 May, 2007 is disclosing a process for making copolymers having polyamide blocks and polyether blocks.

SU 857 161 B by Michachev et al. published August 26, 1981 is drawn to transparent copolyamide for use as constructional and electroinsulating materials.

GB 1 329 032 A of INSTITUT FRANCAIS DU PETROLE published 05 September 1973 is describing amorphous and transparent polyamides and copolyamides.

GB 803 559 B of BRITISH NYLON SPINNERS Ltd. published October 29, 1958 is drawn to high molecular weight synthetic linear polyamides derived from certain adpic acids.

GB 551 820 by DU PONT DE NEMOURS published 11 March, 1943 is describing plasticized synthetic linear condensation polymers.

### Summary of the invention

It is an object of the current invention to provide medical devices comprising modified elastomers or the modified elastomers themselves, preferably Co-Polymers having high flexibility and high stress resistance, especially tensile strength or tear resistance in addition to the good physical characteristics of the Co-Polymers.

The invention thus refers to a medical device or implant comprising a Co-Polymer producible by polymerizing a modified polyamide with a polyether diol or a polyether diamine, characterized in that the modified polyamide is producible by contacting/mixing one or more pre-polyamides with an at least mono-substituted α,ω-di-carboxylic acid or its alkyl ester or its acyl halides and raising the temperature to above 150° C.

The invention further resides in a Co-Polymer according to the invention according to general formula X, Xa, Xb or Xc, XI, Xia, XIb or XIc 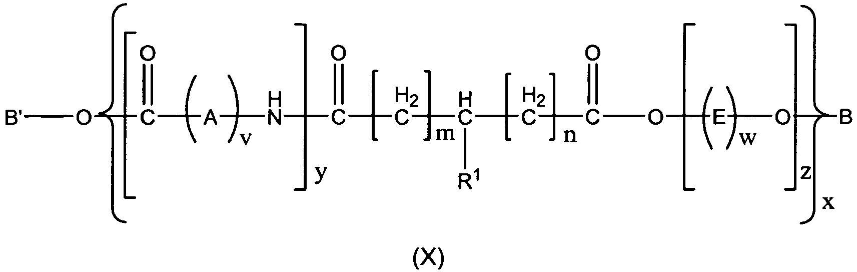 or 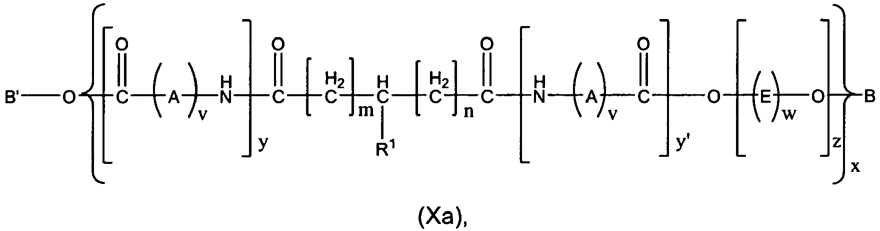 or 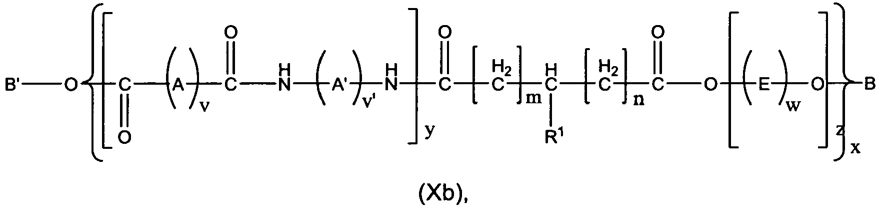 or 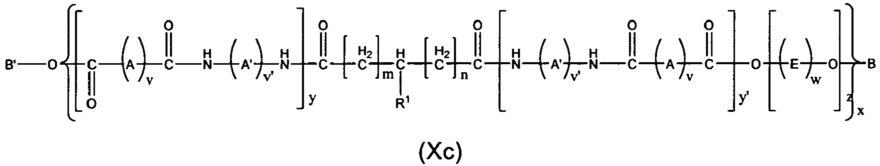 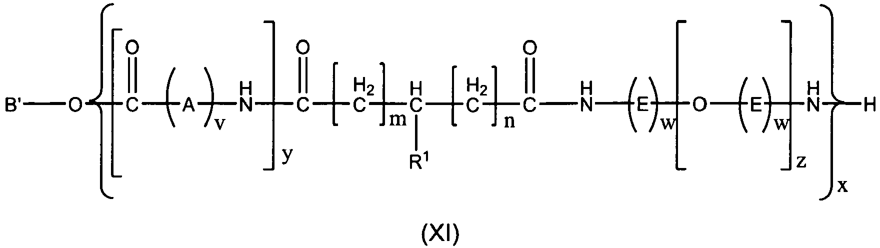 or 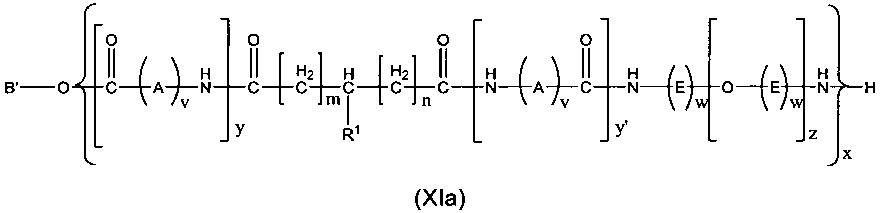 or 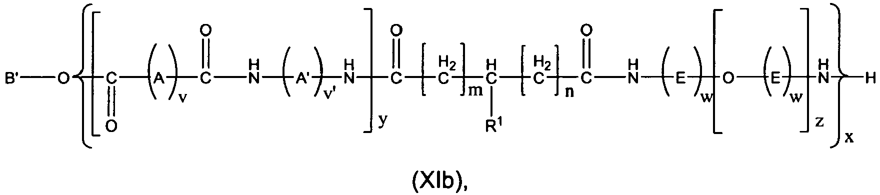 or

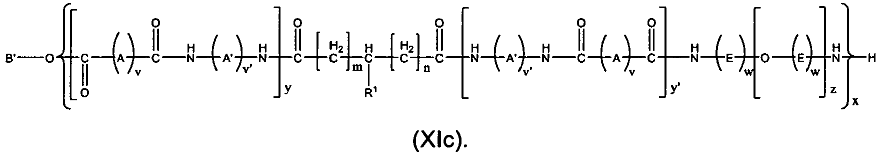

The invention furthermore resides in the use of a Co-Polymer according to the invention in the production of medical devices, balloon material, stents, stent grafts, and catheters.

### Detailed Description of the invention

The use of stents, balloons, catheters and other medical devices etc. in minimal invasive surgery, especially in the cardiovascular field, has in the last years shown a high growth. As a consequence the need for useful materials fulfilling highly specialized needs in the field of different medicinal devices has clearly risen in a technical area, which traditionally is more governed by bulk products. Especially in the field of balloons used cardiovascular surgery there was a clear desire for an elastomer, which is on one hand flexible enough to be introduced into a vascular environment without causing damage, while on the other hand being stable and rigid enough, especially in the moment of actual surgery, and inflation in the vessel, to not be extended too much inside the vessel. Besides that, the material should also have a low water absorption, because its physicochemical properties, while used or while on the shelf could be severely hampered by accepting too much water, as it could also be hampered by changes during storage due to thermo-oxidation.

The invention thus refers to a Co-Polymer producible by polymerizing a modified polyamide with a polyether diol or a polyether diamine, characterized in that the modified polyamide is producible by contacting/mixing one or more pre-polyamides with an at least mono-substituted α,ω-di-carboxylic acid or its alkyl ester or its acyl halides and raising the temperature to above 150° C.

In a preferred embodiment the polymerization resulting in the Co-Polymer wherein the polymerization is done by contacting the modified polyamide with the polyether diol or polyether diamine, preferably in the presence of a catalyst, preferably a Lewis base or a Lewis acid and raising the temperature to
a) either above 150°C in case of a melt polymerization or
b) above 50°C in case of a polymerization in solution.

In a preferred embodiment - preferably drawn to the case of polymerization in solution - the raising of the temperature in the polymerization resulting in the Co-Polymer is done
**a)** already during the mixing/contacting and/or
**b)** under protective gas atmosphere, preferably under argon and/or
**c)** to a temperature above 200° C, preferably above 220°C and/or
**d)** in 2 steps with different temperatures preferably divided by an intermediate step in which the second temperature is reached within a certain time limit and/or
**e)** over a time period of more than 3 h, preferably of more than 4h.

In a preferred embodiment - preferably drawn to the case of melt polymerization - the raising of the temperature in the polymerisation resulting in the Co-Polymer is done
**a)** under protective gas atmosphere, preferably under argon.

In a preferable embodiment of the Co-polymer according to the invention the modified polyamide is polymerized with the polyether diol or the polyether diamine in a molar ratio of 0.9 to 1.1, preferably in equimolar amounts.

A core piece of the invention is the modified polyamide forming a part of the Co-Polmers according to the invention, which is producible by contacting/mixing one or more pre-polyamides, with an at least mono-substituted α,ω-di-carboxylic acid or its alkyl ester and heating to a temperature above 150° C

In a preferred embodiment the heating for the production of the modified polyamide is done
**a)** already during the mixing/contacting and/or
**b)** under protective gas atmosphere, preferably under argon and/or
**c)** to a temperature above 200° C, preferably above 220°C and/or
**d)** in 2 steps with different temperatures preferably divided by an intermediate step in which the second temperature is reached within a certain time limit and/or
**e)** over a time period of more than 3 h, preferably of more than 4h.

Most preferably this mixing is done under protective gas atmosphere - preferably under argon - in a first heating step at more than 200° C - preferably 220°C - for more than 1h - preferably 2h. The temperature was consequently raised within 10 to 30 min - preferably within 20 min - to more than 220°C -preferably to 250 ° C - and the mixture was stirred for another 2h.

There are 3 kinds of material used nowadays for medical devices, especially balloons, over which the material of the current invention - if compared case by case - shows advantages.
a) Nylon: Over Nylon, coming in different sorts, especially Nylon-12, the Co-Polymers of the invention show the advantage, that they are more flexible and/or have a lower water absorption. Especially the lack of flexibility is often considered as a drawback in medical devices using Nylon.
b) PEBA: Over PEBA (e.g. PEBAX®) the Co-Polymers of the invention show the advantage, that they are slightly more rigid and/or have a lower water absorption, again making them superior for the intended special use and allowing a much needed compromise balancing flexibility and rigidity. In addition the material of the invention seems to show higher stability, especially if compared to the effects of thermo-oxidation shown by PEBA and/or also an improved dimensional stability.
c) Blend of a) and b): The need for a compromise between the higher rigidity of Nylon and higher flexibility of PEBA has already resulted in blends being used. Still, these have no defined structures or phases, giving the material of the inventions which seems to have a lower water absorption also already an inherent advantage.

In the context of this invention "contacting/mixing" is understood as placing the at least 2 substances (e.g. pre-polyamide and acid or modified polyamide and polyether) in physical contact, e.g. in a common container, optionally mixing them to increase the amount of areas in contact between the substances.

In the context of this invention "polymerizing" is understood as a process of reacting monomers or building blocks together to form a network of polymer chains under suitable reaction conditions.

In the context of this invention "alkyl ester" of the at least mono-substituted α,ω-di-carboxylic acid is understood as an ester between the acid function on one end of the acid and a C₁₋₆-alkyl group.

In the context of this invention "acyl halide" of the at least mono-substituted α,ω-di-carboxylic acid is understood as the replacement of a hydroxyl group in the acid function by a halogen atom (-C(O)-X) - preferably a chlorine atom.

Generally "at least monsubstituted" means either "monosubstituted" or "polysubstituted" .

An "aryl", "aryl radical" or group is understood as meaning ring systems with at least one aromatic ring but without heteroatoms even in only one of the rings. Examples are phenyl, naphthyl, fluoranthenyl, fluorenyl, tetralinyl or indanyl, in particular 9H-fluorenyl or anthracenyl radicals, which can be unsubstituted or monosubstituted or polysubstituted.

In the context of this invention "cycloalkyl radical" or group is understood as meaning saturated and unsaturated (but not aromatic) cyclic hydrocarbons (without a heteroatom in the ring), which can be unsubstituted or mono- or polysubstituted. Furthermore, C₃₋₄-cycloalkyl represents C₃- or C₄-cycloalkyl, C₃₋₅-cycloalkyl represents C₃-, C₄- or C₅-cycloalkyl, C₃₋₆-cycloalkyl represents C₃-, C₄-, C₅- or C₆-cycloalkyl, C₃₋₇-cycloalkyl represents C₃-, C₄-, C₅-, C₆- or C₇-cycloalkyl, C₃₋₈-cycloalkyl represents C₃-, C₄-, C₅-, C₆-, C₇- or C₈-cycloalkyl, C₄₋₅-cycloalkyl represents C₄- or C₅-cycloalkyl, C₃₋₆-cycloalkyl represents C₄-, C₅- or C₆-cycloalkyl, C₄₋₇-cycloalkyl represents C₄-, C₅-, C₆- or C₇-cycloalkyl, C₃₋₆-cycloalkyl represents C₄-, C₅-, C₆- C₇- or C₈-cycloalkyl C₅₋₆-cycloalkyl represents C₅- or C₆-cycloalkyl and C₅₋₇-cycloalkyl represents C₅-, C₆- or C₇-cycloalkyl. However, mono- or polyunsaturated, preferably monounsaturated, cycloalkyls also in particular fall under the term cycloalkyl as long as the cycloalkyl is not an aromatic system. The cycloalkyl radicals are preferably cyclopropyl, 2-methylcyclopropyl, cyclopropylmethyl, cyclobutyl, cyclopentyl, cyclopentylmethyl, cyclohexyl, cycloheptyl, cyclooctyl, and also adamantly.

A "heterocyclyl", a "heterocyclyl radical" or group or "heterocyclic ring system" is understood as meaning heterocyclic ring systems which contain one or more heteroatoms from the group consisting of nitrogen, oxygen and/or sulfur in the ring or ringsystem, and can also be mono- or polysubstituted. The ringsystem may consist either of only one saturated or unsaturated or even aromatic ring or may consist of 2, 3 or 4 saturated or unsaturated or even aromatic rings, which are condensed in that between two or more of the rings ring members are shared. Examples which may be mentioned from the group of heterocyclyls are furan, benzofuran, thiophene, benzothiophene, pyrrole, pyridine, pyrimidine, pyrazine, quinoline, isoquinoline, phthalazine, benzo-1,2,5-thiadiazole, imidazo-thiazole, benzothiazole, indole, benzotriazole, benzodioxolane, benzodioxane, carbazole and quinazoline.

In connection with aryl radical, cycloalkyl radical, or heterocyclyl radical, "substituted" is understood - unless defined otherwise - as meaning replacement of at least one hydrogen radical on the ring-system of the aryl radical, the cycloalkyl radical, or the heterocyclyl radical by OH, SH, =O, halogen (F, Cl, Br, I), CN, NO₂, COOH; NRₓR_{y}, with Rₓ and R_{y} independently being either H or a saturated or unsaturated, linear or branched, substituted or unsubstituted C₁₋₆-alkyl; by a saturated or unsaturated, linear or branched, substituted or unsubstituted C₁₋₆-alkyl; a saturated or unsaturated, linear or branched, substituted or unsubstituted -O-C₁₋₆-alkyl (alkoxy); a saturated or unsaturated, linear or branched, substituted or unsubstituted -S-C₁₋₆-alkyl; a saturated or unsaturated, linear or branched, substituted or unsubstituted -C(O)-C₁₋₆-alkyl; a saturated or unsaturated, linear or branched, substituted or unsubstituted -C(O)-O-C₁₋₆-alkyl; a substituted or unsubstituted phenyl. "Optionally at least monsubstituted" means either "not substituted" if the option is not fulfilled, "monosubstituted" or "polysubstituted", and "at least monsubstituted" means either "monosubstituted" or "polysubstituted".

Aliphatic radicals/groups, as referred to in the present invention, are optionally mono- or polysubstituted and may be branched or unbranched, saturated or unsaturated. Aliphatic radicals, as defined in the present invention, include alkyl, alkenyl and alkinyl radicals. Unsaturated aliphatic radicals, as defined in the present invention, include alkenyl and alkinyl radicals. Preferred aliphatic radicals according to the present invention include but are not restricted to methyl, ethyl, vinyl (ethenyl), ethinyl, propyl, n-propyl, isopropyl, allyl (2-propenyl), 1-propinyl, methylethyl, butyl, n-butyl, iso-butyl, sec-butyl, tert-butyl butenyl, butinyl, 1-methylpropyl, 2-methylpropyl, 1,1-dimethylethyl, pentyl, n-pentyl, 1,1-dimethylpropyl, 1,2-dimethylpropyl, 2,2-dimethylpropyl, hexyl, 1-methylpentyl, n-heptyl, n-octyl, n-nonyl and n-decyl.

In the context of this invention, alkyl radical or group is understood as meaning saturated and unsaturated, linear or branched hydrocarbons, which can be unsubstituted or mono- or polysubstituted. Thus unsaturated alkyl is understood to encompass alkenyl and alkinyl groups, like e.g. -CH=CH-CH₃ or -C=C-CH₃, while saturated alkyl encompasses e.g. -CH₃ and -CH₂-CH₃. In these radicals, C₁₋₂-alkyl represents C₁- or C₂-alkyl, C₁₋₃-alkyl represents C₁-, C₂- or C₃-alkyl, C₁₋₄-alkyl represents C₁-, C₂-, C₃- or C₄-alkyl, C₁₋₅-alkyl represents C₁-, C₁-, C₃-, C₄-, or C₅-alkyl, C₁₋₆-alkyl represents C₁-, C₂-, C₃-, C₄-, C₅- or C₆-alkyl, C₁₋₇-alkyl represents C₁-, C₂-, C₃-, C₄-, C₅-, C₆- or C₇-alkyl, C₁₋₈-alkyl represents C₁-, C₂-, C₃-, C₄-, C₅-, C₆-, C₇- or C₈-alkyl, C₁₋₁₀-alkyl represents C₁-, C₂-, C₃-, C₄-, C₅-, C₆-, O₇-, C₈-, C₉- or C₁₀-alkyl and C₁₋₁₈-alkyl represents C₁-, C₂-, C₃-, C₄-, C₅-, C₆-, C₇-, C₈-, C₉-, C₁₀-, C₁₁-, C₁₂-, C₁₃-, C₁₄-, C₁₅-, C₁₆-, C₁₇- or C₁₈-alkyl. The alkyl radicals are preferably methyl, ethyl, vinyl (ethenyl), propyl, allyl (2-propenyl), 1-propinyl, methylethyl, butyl, 1-methylpropyl, 2-methylpropyl, 1,1-dimethylethyl, pentyl, 1,1-dimethylpropyl, 1,2-dimethylpropyl, 2,2-dimethylpropyl, hexyl, 1-methylpentyl, if substituted also CHF₂, CF₃ or CH₂OH etc.

In connection with alkylene, alkyl or aliphatic radical or group - unless defined otherwise - the term "substituted" in the context of this invention is understood as meaning replacement of at least one hydrogen radical by F, Cl, Br, I, NH₂, SH or OH; within that "monosubstituted" means the substitution of exactly one hydrogen radical, whereas "polysubstituted" means the substitution of more than one hydrogen radical with "polysubstituted" radicals being understood as meaning that the replacement takes effect both on different and on the same atoms several times with the same or different substituents, for example three times on the same C atom, as in the case of CF₃, or at different places, as in the case of e.g. -CH(OH)-CH=CH-CHCl₂. Therefore, "optionally at least monsubstituted" means either "not substituted" if the option is not fulfilled, "monosubstituted" or "polysubstituted", and "at least monsubstituted" means either "monosubstituted" or "polysubstituted". This definition of "substituted" or the selected substituents generally also applies to the "at least mono-substituted α,ω-di-carboxylic acid or its alkyl ester or its acyl halides" or an acid of formula I.

The term "alkylene" is understood as meaning a divalent alkyl group like -CH₂- or-CH₂-CH₂-, with (CH₂)₃₋₆ being understood as meaning -CH₂-CH₂-CH₂-, -CH₂-CH₂-CH₂-CH₂-, -CH₂-CH₂-CH₂-CH₂-CH₂- and -CH₂-CH₂-CH₂-CH₂-CH₂-CH₂-, (CH₂)₁₋₄ is to be understood as meaning -CH₂-, -CH₂-CH₂-, -CH₂-CH₂-CH₂- and -CH₂-CH₂-CH₂-CH₂-, (CH₂)₄₋₅ is to be understood as meaning -CH₂-CH₂-CH₂-CH₂- and -CH₂-CH₂-CH₂-CH₂-CH₂-, etc.

In a preferred embodiment of the modified polyamide forming a part of the Co-Polymer according to the invention the at least mono-substituted α,ω-di-carboxylic acid is selected from at least mono-substituted oxalic acid, malonic acid, succinic acid, fumaric acid, glutaric acid, adipic acid, 1,7-heptane-dicarboxylic acid, 1,8-octane-di-carboxylic acid, 1,9-nonane-di-carboxylic acid, 1,10-decane-di-carboxylic acid, 1,11-undecane-di-carboxylic acid, 1,12-dodecane-di-carboxylic acid; preferably from at least mono-substituted adipic acid or 1,10-decane-di-carboxylic acid.

In the context of this invention "forming a part of the Co-Polymer according to the invention" is defined as the compound "forming a part" being the source of a building block or building blocks derived from this compound during the production of the Co-Polymer according to the invention. Thus, these building blocks are being part of the Co-polymer after the final production step (e.g. the polymerisation).

In another preferred embodiment of the modified polyamide forming a part of the Co-Polymer according to the invention the at least mono-substituted α,ω-di-carboxylic acid is a compound of general formula I

HOOC-(CH₂)ₘ-CHR¹-(CH₂)ₙ-COR² (I)

wherein
m and n are independently from each other selected from a natural number and 0 and n + m is between 1 and 9, preferably between 3 and 7;
R² is selected from OH, halogen or OC₁₋₄-alkyl;
R¹ is any radical except hydrogen, preferably is a sterically voluminous group.

In the context of this invention a "sterically voluminous group" is understood as a radical that due to its steric effect, derived from the amount of space occupied by atoms of the molecule, does give a relatively high effect of steric hindrance. Steric effects arise from the fact that each atom within a molecule occupies a certain amount of space. If atoms are brought too close together, there is an associated cost in energy, and this may affect the molecule's preferred shape and chemical reaction. Steric hindrance occurs when the size of groups within a molecule prevents chemical reactions that are observed in related smaller molecules or may also restrict molecular geometry between adjacent groups.

In another preferred embodiment of the modified polyamide according to formula I forming a part of the Co-Polymer according to the invention
either
m and n are independently from each other selected from 0, 1, 2 or 3 and n + m is 3;
   or
m and n are independently from each other selected from 0, 1, 2, 3, 4, 5, 6 or 7 and n + m is 7;
preferably wherein
m and n are independently from each other selected from 0, 1, 2 or 3 and n + m is 3.

In another preferred embodiment of the modified polyamide forming a part of the Co-Polymer according to the invention the at least mono-substituted α,ω-di-carboxylic acid is a compound of general formula (II) 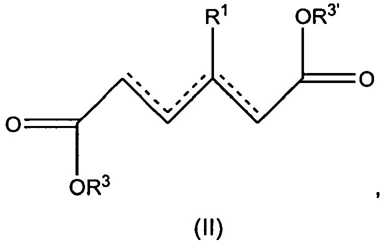 wherein
one of R³ and R³ is selected from hydrogen, while the other may be either hydrogen or C₁₋₄-alkyl;
0, 1 or 2 of the bonds marked by a dotted line .......... may be a double bond, with the proviso, that if there are 2 double bonds they may not touch the same C-atom;
R¹ is any radical except hydrogen, preferably is a sterically voluminous group.

In another preferred embodiment of the modified polyamide according to either formula I or II forming a part of the Co-Polymer according to the invention
R¹ is selected from halogen; a branched or linear, saturated or non-saturated, optionally substituted C₁₋₆ aliphatic radical; an optionally substituted aryl; a saturated or non-saturated, optionally substituted C₃₋₁₀-cycloalkyl; an optionally substituted heterocyclyl.

In another preferred embodiment of the modified polyamide forming a part of the Co-Polymer according to the invention the at least mono-substituted α-ω-di-carboxylic acid is 3-tert. butyl adipic acid.

In another preferred embodiment of the modified polyamide forming a part of the Co-Polymer according to the invention the pre-polyamide is a structure of general formula III or IIIa 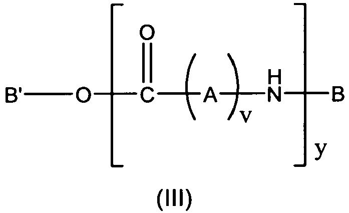 or 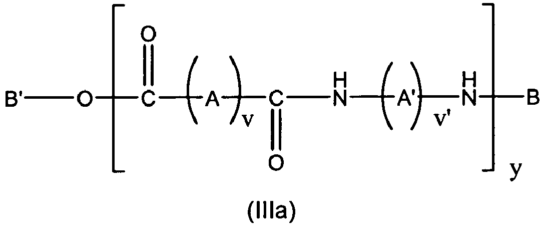 , preferably a structure of general formula III
, wherein
A is a divalent, branched or linear, saturated or non-saturated, optionally substituted hydrocarbon chain, with optionally at least one carbon atom being replaced by NH, O or S; preferably is a divalent, branched or linear, saturated or non-saturated, optionally substituted hydrocarbon chain, with optionally one carbon atom being replaced by NH, O or S;
A' is a divalent, branched or linear, saturated or non-saturated, optionally substituted hydrocarbon chain, with optionally at least one carbon atom being replaced by NH, O or S; preferably is a divalent, branched or linear, saturated or non-saturated, optionally substituted hydrocarbon chain, with optionally one carbon atom being replaced by NH, O or S;
B and B' independently from one another are selected from H or C₁₋₄-Alkyl;
v is a natural number between 1 and 24;
v' is a natural number between 1 and 24;
y is a natural number ≥1.

In another preferred embodiment of the modified polyamide forming a part of the Co-Polymer according to the invention in the pre-polyamide according to general formula III or IIIa
A is a branched or linear, saturated or non-saturated, optionally substituted divalent aliphatic group; preferably is optionally substituted alkylene; more preferably is -CH₂-;
A' is a branched or linear, saturated or non-saturated, optionally substituted divalent aliphatic group; preferably is optionally substituted alkylene; more preferably is -CH₂-;
   and/or
v is a natural number between 3 and 13, preferably is a natural number between 5 and 11; more preferably is 5, 10 or 11, most preferably is 11 or 5;
v' is a natural number between 3 and 13, preferably is a natural number between 5 and 11; more preferably is 5, 10 or 11, most preferably is 11 or 5;
preferably,

if the pre-polyamide is a structure according to general formula III,
A is a branched or linear, saturated or non-saturated, optionally substituted divalent aliphatic group; preferably is optionally substituted alkylene; more preferably is -CH₂-;
   and/or
v is a natural number between 3 and 13, preferably is a natural number between 5 and 11; more preferably is 5, 10 or 11, most preferably is 11.

In another preferred embodiment of the modified polyamide forming a part of the Co-Polymer according to the invention the pre-polyamide is selected from Nylon 6; Nylon 6,6; Nylon 11; or Nylon 12; preferably is Nylon 12.

In another preferred embodiment of the modified polyamide forming a part of the Co-Polymer according to the invention the pre-polyamide is selected from Nylon 6; Nylon 6,6; Nylon 11; or Nylon 12; preferably is Nylon 12
and
the at least mono-substituted α-ω-di-carboxyloc acid is 3-tert. butyl adipic acid.

In another preferred embodiment of the modified polyamide forming a part of the Co-Polymer according to the invention the at least mono-substituted α-ω-di-carboxylic acid is added - when producing the modified polyamide - in an amount resulting in a molar ratio between the acid and the pre-polyamide (wherein the molarity of the pre-polyamide is calculated relatively based on the equivalent number of theoretical lactam units in the pre-polyamide) of
- between 0.05 and 0.0005, preferably between 0.025 and 0.001; or
- between 1.0 and 0.0005, preferably between 0.75 and 0.00075, and more preferably between 0.5 and 0.001, or between 0.05 and 0.004, or between 0.1 and 0.001.

In another preferred embodiment of the modified polyamide forming a part of the Co-Polymer according to the invention the at least mono-substituted α-ω-di-carboxylic acid is added - when producing the modified polyamide - in an amount resulting in a molar ratio between the acid and the pre-polyamide calculated (wherein the molarity of the pre-polyamide is calculated relatively based on the number and molecular weight of polymerized amide building blocks (VIII)) 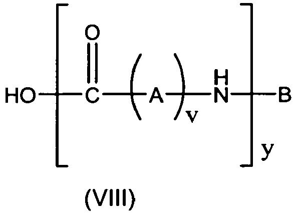 and the molar ratio results in
- between 0.05 and 0.0005, preferably between 0.025 and 0.001; or
- between 1.0 and 0.0005, preferably between 0.75 and 0.00075, and more preferably between 0.5 and 0.001, or between 0.05 and 0.004, or between 0.1 and 0.001.

Thus, e.g. if mixing Y grams of di-carboxylic acid and X grams of pre-polyamide, the amount of acid is divided by its molecular weight to give the molarity, while the amount of pre-polyamide is divided by the molecular weight of the building block/the theoretical basic lactam unit to give its relative molarity. Then the relative molecular ratio of acid : pre-polyamide is calculated.

In another preferred embodiment of the modified polyamide forming a part of the Co-Polymer according to the invention the reaction leading to the modified polyamide is executed using reactive extrusion as described in DD 276 290 A1 and Eichhorn et al. (Journal of Applied Polymer Science, Vol. 62, 2053-2060 (1996).

In another preferred embodiment of the modified polyamide forming a part of the Co-Polymer according to the invention the modified polyamide is of general formula IV or IVa 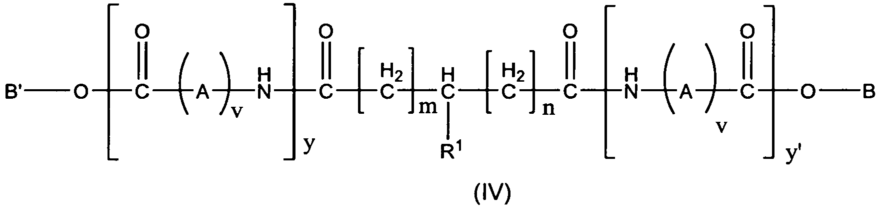 or 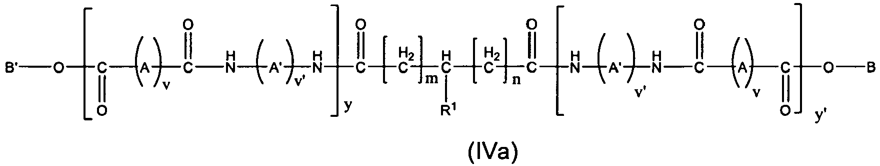 , preferably IV,
wherein
A is a divalent, branched or linear, saturated or non-saturated, optionally substituted hydrocarbon chain, with optionally at least one carbon atom being replaced by NH, O or S; preferably is a divalent, branched or linear, saturated or non-saturated, optionally substituted hydrocarbon chain, with optionally one carbon atom being replaced by NH, O or S;
A' is a divalent, branched or linear, saturated or non-saturated, optionally substituted hydrocarbon chain, with optionally at least one carbon atom being replaced by NH, O or S; preferably is a divalent, branched or linear, saturated or non-saturated, optionally substituted hydrocarbon chain, with optionally one carbon atom being replaced by NH, O or S;
B and B' independently from one another are selected from H or C₁₋₄-Alkyl;
v is a natural number between 1 and 24;
v' is a natural number between 1 and 24;
y is a natural number ≥1;
y' is a natural number ≥1 or 0;
m and n are independently from each other selected from 0 and a natural number between 1 and 9 and n + m is a natural number between 1 and 9; and
R¹ is any radical except hydrogen, preferably is a sterically voluminous group.

In another preferred embodiment of the modified polyamide forming a part of the Co-Polymer according to the invention the modified polyamide is of general formula V 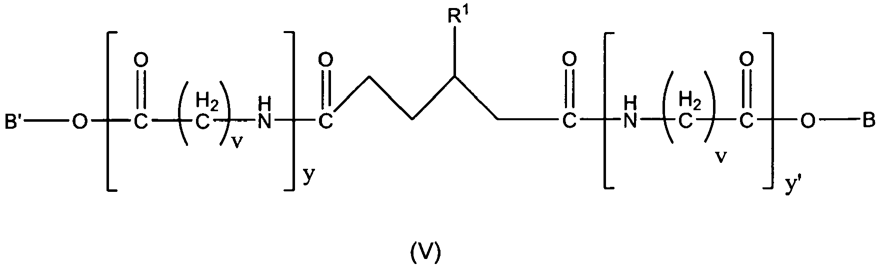 , wherein
B and B' independently from one another are selected from H or C₁₋₄-Alkyl;
v is a natural number between 1 and 24;
y is a natural number ≥1.
y' is a natural number ≥1 or 0;
R¹ is selected from halogen; a branched or linear, saturated or non-saturated, optionally substituted C₁₋₆ aliphatic radical; an optionally substituted aryl; a saturated or non-saturated, optionally substituted C₃₋₁₀-cycloalkyl; an optionally substituted heterocyclyl.

In another preferred embodiment of the modified polyamide forming a part of the Co-Polymer according to the invention the modified polyamide is of general formula IV or V, wherein
B and B' are hydrogen;
   and/or
v is a natural number between 3 and 13, preferably is a natural number between 5 and 11; preferably is 5, 10 or 11, more preferably is 5 or 11, most preferably is 11;
   and/or
y' is 0;
   and/or
y + y' is between 20 and 2000, preferably 40 and 1000;
   and/or
R¹ is selected from halogen; a branched or linear, saturated or non-saturated, optionally substituted C₁₋₄ alkyl-radical, preferably is iso-propyl or tert. butyl, more preferably is tert. butyl.

In another preferred embodiment of the modified polyamide forming a part of the Co-Polymer according to the invention the modified polyamide is of general formula V, wherein
v is 11;
   and
R¹ is tert. butyl.

In another preferred embodiment of the polyether forming a part of the Co-Polymer according to the invention the polyether is a polyether diol of general formula VI or VIa 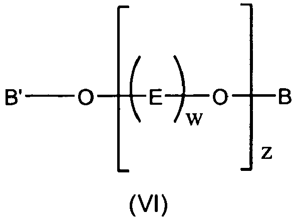 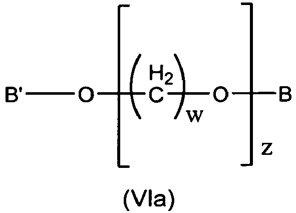 or the polyether is a polyether diamine of general formula VII or VIIa 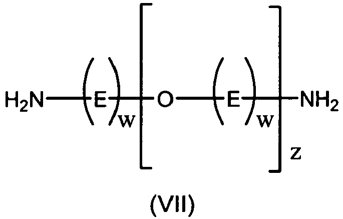 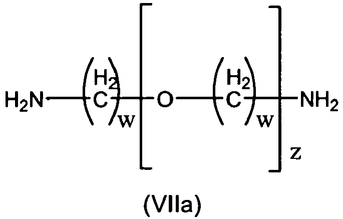 , wherein
E is a divalent, branched or linear, saturated or non-saturated, optionally substituted hydrocarbon chain;
B and B' independently from one another are selected from H or C₁₋₄-Alkyl;
w is a natural number between 1 and 24;
z is a natural number ≥1.

In another preferred embodiment of the polyether forming a part of the Co-Polymer according to the invention the polyether is a polyether diol of general formula VIa or a polyether diamine of general formula VIIa
, wherein
B and B' are hydrogen;
   and/or
w is a natural number between 1 and 10; preferably if z =1, w is a natural number between 1 and 10 and if z ≠ 1, w is a natural number between 2 and 10;
   and/or
z is a natural number between 1 and 2000, preferably between 2 and 2000, more preferably between 1 and 1000.

In another preferred embodiment of the Co-polymer according to the invention
- either the reaction leading to the modified polyamide; or
- the polymerization reaction; or
- both reactions
is/are executed using reactive extrusion as described in DD 276 290 A1 and Eichhorn et al. (Journal of Applied Polymer Science, Vol. 62, 2053-2060 (1996).

Another aspect the invention relates to Co-Polymers (B) according to general formula X, Xa, Xb, or Xc, XI, XIa, XIb, or XIc 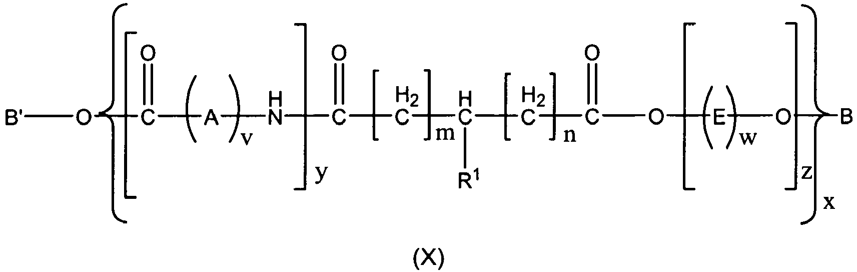 or 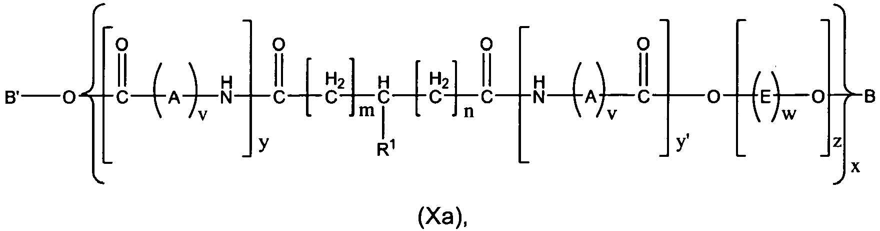 or 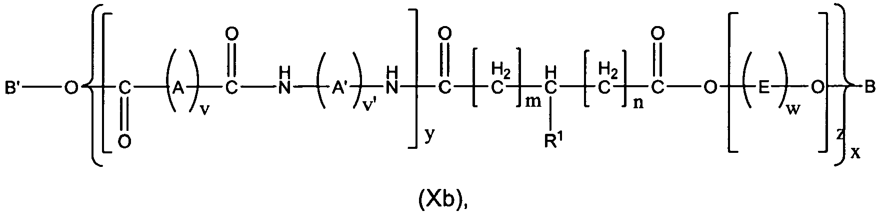 or 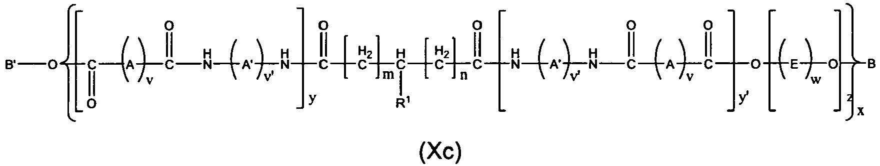 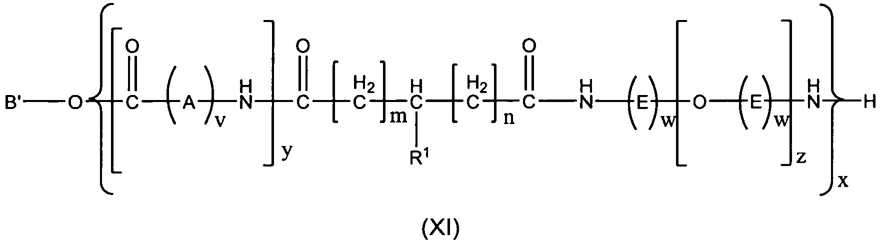 or 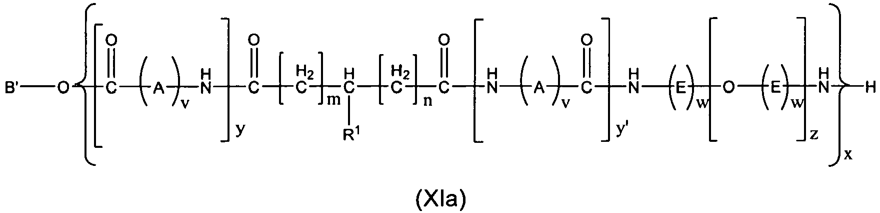 or 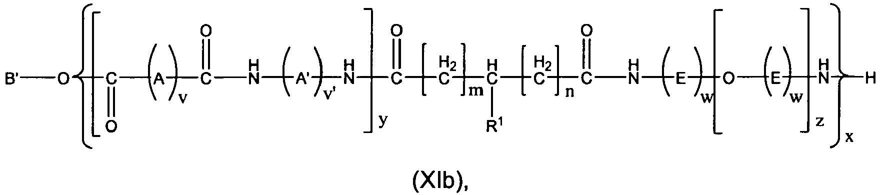 or 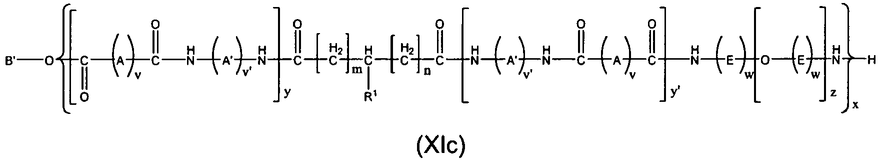 , wherein
A is a divalent, branched or linear, saturated or non-saturated, optionally substituted hydrocarbon chain, with optionally one carbon atom being replaced by NH, O or S;
A' is a divalent, branched or linear, saturated or non-saturated, optionally substituted hydrocarbon chain, with optionally one carbon atom being replaced by NH, O or S;
E is a divalent, branched or linear, saturated or non-saturated, optionally substituted hydrocarbon chain;
B and B' independently from one another are selected from H or C₁₋₄-Alkyl;
v is a natural number between 1 and 24;
v' is a natural number between 1 and 24;
w is a natural number between 1 and 24;
x is a natural number ≥1;
y and y' independently from another are a natural number ≥1;
z is a natural number ≥1;
m and n are independently from each other selected from 0 and a natural number between 1 and 9 and n + m is a natural number between 1 and 9; and
R¹ is any radical except hydrogen, preferably is a sterically voluminous group.

In another preferred embodiment of the Co-Polymer (B) according to the invention the Co-Polymer is of general formula XII, XIIa or XII, XIIIa 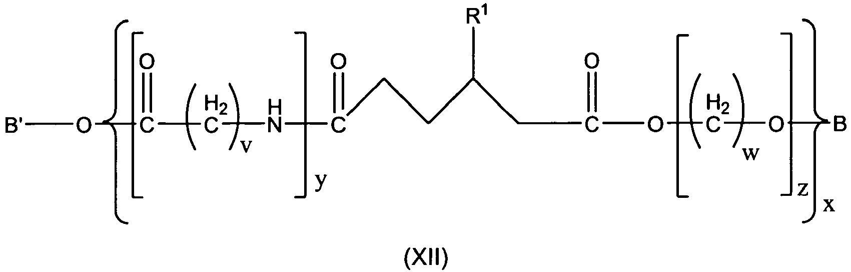 or 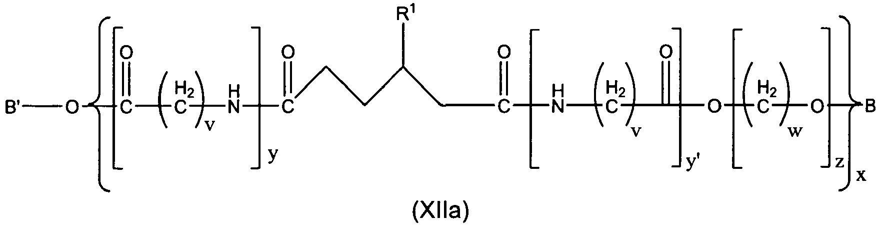 or 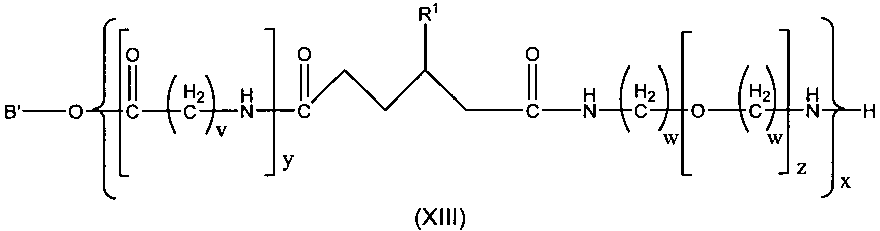 or 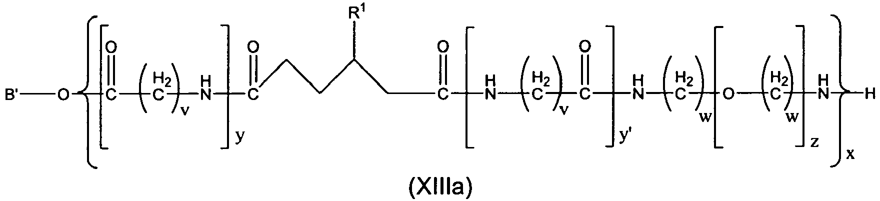 , wherein
B and B' independently from one another are selected from H or C₁₋₄-Alkyl;
v is a natural number between 1 and 24;
w is a natural number between 1 and 24;
x is a natural number ≥1;
y and y' are independently from one another a natural number ≥1;
z is a natural number ≥1;
R¹ is selected from halogen; a branched or linear, saturated or non-saturated, optionally substituted C₁₋₆ aliphatic radical; an optionally substituted aryl; a saturated or non-saturated, optionally substituted C₃₋₁₀-cycloalkyl; an optionally substituted heterocyclyl.

In another preferred embodiment of the Co-Polymer (B) according to the invention according to general formula X, Xa, Xb, Xc or XI, Xla, Xlb, Xlc or XII, Xlla or XIII, XIIIa in the Co-Polymer
B and B' are hydrogen;
   and/or
v is a natural number between 3 and 13, preferably is a natural number between 5 and 11; preferably is 5, 10 or 11, more preferably is 5 or 11, most preferably is 11;
   and/or
w is a natural number between 1 and 10; preferably if z =1, w is a natural number between 1 and 10 and if z ≠ 1, w is a natural number between 2 and 10;
   and/or
z is a natural number between 1 and 2000, preferably between 2 and 2000, more preferably between 1 and 1000;
   and/or
y is a natural number between 1 and 2000, preferably 2 and 1000, more preferably between 2 and 200, even more preferably between 2 and 150, most preferably between 2 and 100;
   and
y' is a natural number between 1 and 2000, preferably 2 and 1000, more preferably between 2 and 200, even more preferably between 2 and 150, most preferably between 2 and 100;
   and
the sum of y + y' is a natural number between 1 and 2000, preferably between 2 and 1000, more preferably between 2 and 200, even more preferably between 2 and 150, most preferably between 2 and 100;
   and/or
x is a natural number between 1 and 100;
   and/or
R¹ is selected from halogen; a branched or linear, saturated or non-saturated, optionally substituted C₁₋₄ alkyl-radical, preferably is iso-propyl or tert. butyl, more preferably is tert. butyl.

In another preferred embodiment of the Co-Polymer (B) according to the invention according to general formula XII or XIII, in the Co-Polymer (B)
v is 11;
   and
R¹ is tert. butyl.

In another preferred embodiment of the Co-Polymer according to the invention the Co-Polymer is modified in at least one of the end groups with liquid crystalline oligomers (LCOs/LC-oligomers).

In a preferred embodiment of the Co-Polymer (C) according to the invention outlined above
A is CH₂;
   and/or
E is CH₂;
   and/or
B and B' are hydrogen;
   and/or
v is a natural number between 3 and 13, preferably is a natural number between 5 and 11; preferably is 5, 10 or 11, more preferably is 5 or 11, most preferably is 11;
   and/or
w is a natural number between 1 and 10; preferably if z =1, w is a natural number between 1 and 10 and if z ≠ 1, w is a natural number between 2 and 10;
   and/or
z is a natural number between 1 and 2000, preferably between 2 and 2000, more preferably between 1 and 1000;
   and/or
R¹ is selected from halogen; a branched or linear, saturated or non-saturated, optionally substituted C₁₋₄ alkyl-radical, preferably is iso-propyl or tert. butyl, more preferably is tert. Butyl;
   and/or
m and n are independently from each other selected from a natural number and 0 and n + m is between 1 and 9, preferably between 3 and 7;
   and/or
R² is selected from OH, halogen or OC₁₋₄-alkyl.

In a preferred embodiment of the Co-Polymer (C) according to the invention outlined above the Co-Polymer contains the units derived from polyamide-forming monomers in an amount of 15 to 90 weight %.

In another preferred embodiment of the Co-Polymer (C) according to the invention outlined above the Co-Polymer contains the units derived from polyether diols or polyether diamines in an amount of 15 to 90 weight %.

Another aspect of the invention provides a process for the production of a modified polyamide forming a part of the Co-Polymer according to the invention, wherein one or more pre-polyamide/s is contacted/mixed with an at least mono-substituted α-ω-di-carboylic acid, preferably at least mono- substituted adipic acid, and then the mixture is heated to a temperature above 150° C.

In another preferred embodiment of the process for the production of a modified polyamide forming a part of the Co-Polymer according to the invention the at least mono-substituted α-ω-di-carboylic acid, preferably the at least mono- substituted adipic acid is added in an amount resulting in a molar ratio between the acid and the pre-polyamide calculated relatively based on the equivalent number of lactam Units in the pre-polyamide
- between 0.05 and 0.0005, preferably between 0.025 and 0.001; or
- between 1.0 and 0.0005, preferably between 0.75 and 0.00075, and more preferably between 0.5 and 0.001, or between 0.05 and 0.004, or between 0.1 and 0.001;
or in an amount resulting in a molar ratio between the acid and the pre-polyamide calculated relatively based on molecular weight of the polymerized amide building block (VIII) 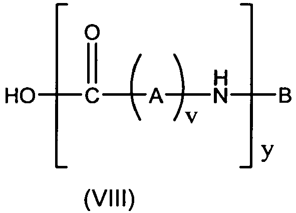
- between 0.05 and 0.0005, preferably between 0.025 and 0.001; or
- between 1.0 and 0.0005, preferably between 0.75 and 0.00075, and more preferably between 0.5 and 0.001, or between 0.05 and 0.004, or between 0.1 and 0.001.

In another preferred embodiment of the process for the production of a modified polyamide forming a part of the Co-Polymer according to the invention the reaction is executed using reactive extrusion.

Another aspect of the current invention provides the use of a Co-Polymer according to the invention in the production of implants or medical devices, preferably implanted or implantable medical devices, more preferably balloon/balloon material, stents, stent grafts, grafts graft connectors or catheters.

Another aspect of the current invention provides implants or medical devices, comprising the Co-Polymer according to the invention, preferably implanted or implantable medical devices, more preferably for the production of balloon/balloon material, of stents, stent grafts, grafts graft connectors or catheters.

"Balloon or balloon material" in the context of this invention especially means a balloon used in coronary balloon angioplasty and the material used for these balloons, especially balloon catheters. In this , e.g. a balloon catheter is inserted into an artery and advanced to e.g. a narrowing in a coronary artery. The balloon is then inflated to enlarge the lumen.

"Stent" means an elongate implant with a hollow interior and at least two orifices and usually a circular or elliptical, but also any other, cross section, preferably with a perforated, lattice-like structure that is implanted into vessels, in particular blood vessels, to restore and maintain the vessels patent and functional.

"Graft" means an elongate implant with a hollow interior and with at least two orifices and usually circular or elliptical, but also any other, a cross section and with at least one closed polymer surface which is homogeneous or, optionally, woven from various strands. The surface preferably is impermeable to corpuscular constituents of blood and/or for water, so that the implant serves as a vascular prosthesis and is usually employed for damaged vessels or in place of vessels.

"Stent graft" means a connection between a stent and a graft. A stent graft preferably comprises a vascular prosthesis reinforced with a stent (both as defined above), wherein a polymer layer is homogeneous or, optionally, woven from various strands and is impermeable for corpuscular constituents of blood and/or for water. More preferably, the stent has on at least 20% of its surface a perforated (lattice-like), preferably metallic, outer layer and at least one closed polymer layer that is located inside or outside the stent outer layer. The closed polymer layer may be homogeneous or, optionally, woven from various strands, and is impermeable for corpuscular constituents of blood and/or for water. Optionally, where the closed polymer layer is disposed inside the metallic outer layer, a further perforated (lattice-like), preferably metallic, inner layer may be located inside the polymer layer.

"Graft connector" means an implant that connects at least two hollow organs, vessels or grafts, consists of the materials defined for grafts or stent grafts and/or has the structure defined for the latter. Preferably, a graft connector has at least two, three or four, orifices, arranged, for example, as an asymmetric "T" shape.

"Catheter" means a tubular instrument intended for introduction into hollow organs. More preferably, a catheter may be designed for use in guiding other catheters, or for angiography, ultrasound imaging, or - especially - balloon catheters for dilatation or stent delivery. This includes also a "Catheter pump" meaning a catheter provided on its tip with a propeller able to assist the pumping of the myocardium.

The examples and figures in the following section describing the use of the polyamides are merely illustrative and the invention cannot be considered in any way as being restricted to these applications.

### Examples:

### A) The following examples A1 to A5 are examples of the production of the modified polyamide forming part of the Co-Polymer according to the invention:

### Example A1: (1.4%; normal reaction)

50 g dried Nylon 12 (with a molecular weight of approx. 26000 g/mol) was mixed with 0.688 g (0.0034 mol) 3-tert. butyl adipic acid under argon for 2h at 220° C. The temperature was raised within 20 min to 250 ° C and the mixture was stirred for another 2h. The resulting solid gave a molecular weight of 13000 g/mol. The relative molar ratio (see above) was 0.013, being calculated as 0.0034 mol (acid) : 0.253 rel. mol (Polyamid: MW (building block) 197.3).

### Example A2: (1.4%; extrusion)

The reaction of example A1 is carried out in an extruder by way of the so-called (reactive extrusion) as described in DD 276 290 A1 and Eichhorn et al. (Journal of Applied Polymer Science, Vol. 62, 2053-2060 (1996). Reaction time in each of the 2 steps is reduced to below 30 min.

### Example A3: (0.5%; normal reaction)

1651 g dried Nylon 12 (with a molecular weight of approx. 26000 g/mol) is mixed with 8.25 g (0.040 mol) 3-tert. butyl adipic acid under argon for 2h at 220° C. The temperature is raised within 20 min to 250 ° C and the mixture is stirred for another 2h. The relative molar ratio (see above) is 0.0048, being calculated as 0.040 mol (acid) : 8.368 rel. mol (Polyamid: MW (building block) 197.3).

### Example A4: (0.25%; normal reaction)

1753 g dried Nylon 12 (with a molecular weight of approx. 26000 g/mol) is mixed with 4.38 g (0.022 mol) 3-tert. butyl adipic acid under argon for 2h at 220° C. The temperature is raised within 20 min to 250° C and the mixture is stirred for another 2h. The relative molar ratio (see above) is 0.0025, being calculated as 0.022 mol (acid) : 8.885 rel. mol (Polyamid: MW (building block) 197.3).

### Example A5: (2.0%; normal reaction)

1694 g dried Nylon 12 (with a molecular weight of approx. 26000 g/mol) is mixed with 33.88 g (0.167 mol) 3-tert. butyl adipic acid under argon for 2h at 220° C. The temperature is raised within 20 min to 250° C and the mixture is stirred for another 2h. The relative molar ratio (see above) is 0.0195, being calculated as 0.167 mol (acid) : 8.586 rel. mol (Polyamid: MW (building block) 197.3).

### C) The following examples C1 or C2 are examples of the production of a Co-Polymer according to the invention:

### Example C1: Co-Polymer with Polyether diol

The modified polyamide according to example A1 is mixed with polytetramethyleneoxide(PTMO) diol at 200°C and the mixture is stirred for 4h.

### Example C2: Co-Polymer with Polyether diamine

The modified polyamide according to example A1 is mixed with polytetramethyleneoxide(PTMO) diamine at 200°C and the mixture is stirred for 4h.

In some examples the modified polyamide according to example A1 is mixed with polytetramethyleneoxide(PTMO) diol or diamine in a roughly or exactly equimolar amount.

As a general remark as further examples the following polyether diamines according to general formula (VII) with E being different from CH₂ are also available commercially as "Jeffamines"® and are of the following formula with w =1 and z = 2.5 from HUNTSMAN: 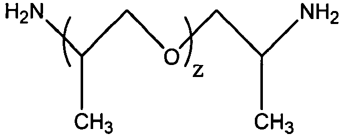 and may be reacted with the modified polyamides of examples A.

The polyether diols or diamines of this invention are commercially available or are easily synthesized by someone skilled in the art. So, as further example amino-modified polyethylene oxides can also be produced according to the state of the art, like e.g. the following literature article included here by reference: McManus, N. T. et al., Journal of Applied Polymer Science (2006), 101(6), 4230-4237.

### Test of mechanical properties:

The material according to examples C1 and C2 are compared to PEBAX®

## Claims

1. Co-Polymer obtainable by polymerizing a modified polyamide with a polyether diol or a polyether diamine, **characterized in that** the modified polyamide is obtainable by contacting/mixing one or more pre-polyamides with an at least mono-substituted α-ω-di-carboxylic acid or its alkyl ester or its acyl halides and raising the temperature to above 150° C.

2. Co-Polymer according to claim 1, wherein the polymerization is done by contacting the modified polyamide with the polyether diol or polyether diamine, preferably in the presence of a catalyst, preferably a Lewis base or a Lewis acid and raising the temperature to
a) either above 150°C in case of a melt polymerization or
b) above 50°C in case of a polymerization in solution.

3. Co-Polymer according to any of claims 1 or 2, wherein the at least mono-substituted α-ω-di-carboxylic acid is selected from at least mono-substituted oxalic acid (2), malonic acid (3), succinic acid (4), fumaric acid (4), glutaric acid (5), adipic acid, 1,7-heptane-dicarboxylic acid, 1,8-octane-di-carboxylic acid, 1,9-nonane-di-carboxylic acid, 1,10-decane-di-carboxylic acid, 1,11-undecane-di-carboxylic acid, 1,12-dodecane-di-carboxylic acid; preferably from at least mono-substituted adipic acid or 1,10-decane-di-carboxylic acid.

4. Co-Polymer according to any of claims 1 to 2, wherein the at least mono-substituted α-ω-di-carboxylic acid is a compound of general formula I
HOOC-(CH₂)ₘ-CHR¹-(CH₂)ₙ-COR² (I)
wherein
m and n are independently from each other selected from a natural number and 0 and n + m is between 1 and 9, preferably between 3 and 7;
R² is selected from OH, halogen or OC₁₋₄-alkyl;
R¹ is any radical except hydrogen, preferably is a sterically voluminous group.

5. Co-Polymer according to claim 4, wherein
either
m and n are independently from each other selected from 0, 1, 2 or 3 and n + m is 3;
or
m and n are independently from each other selected from 0, 1, 2, 3, 4, 5, 6 or 7 and n + m is 7;
preferably wherein
m and n are independently from each other selected from 0, 1, 2 or 3 and n + m is 3.

6. Co-Polymer according to any of claims 1 to 2, wherein the at least mono-substituted α-ω-di-carboxylic acid is a compound of general formula (II) 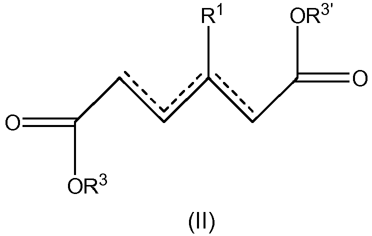 wherein
one of R³ and R³ is selected from hydrogen, while the other may be either hydrogen or C₁₋₄-alkyl;
0, 1 or 2 of the bonds marked by a dotted line .......... may be a double bond, with the proviso, that if there are 2 double bonds they may not touch the same C-atom;
R¹ is any radical except hydrogen, preferably is a sterically voluminous group.

7. Co-Polymer according to any of claims 4 to 6, wherein
R¹ is selected from halogen; a branched or linear, saturated or non-saturated, optionally substituted C₁₋₆ C₁₋₆ aliphatic radical; an optionally substituted aryl; a saturated or non-saturated, optionally substituted C₃₋₁₀-cycloalkyl; an optionally substituted heterocyclyl.

8. Co-Polymer according to any of claims 1 to 7, wherein the at least mono-substituted α-ω-di-carboxylic acid is 3-tert. butyl adipic acid.

9. Co-Polymer according to claim 1 wherein the pre-polyamide is a structure of general formula III or IIIa 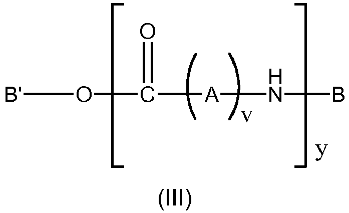 or 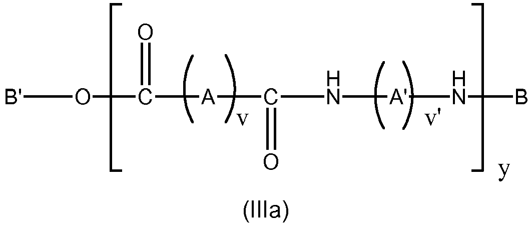 , preferably a structure of general formula III
, wherein
A is a divalent, branched or linear, saturated or non-saturated, optionally substituted hydrocarbon chain, with optionally one carbon atom being replaced by NH, O or S;
A' is a divalent, branched or linear, saturated or non-saturated, optionally substituted hydrocarbon chain, with optionally one carbon atom being replaced by NH, O or S;
B and B' independently from one another are selected from H or C₁₋₄-Alkyl;
v is a natural number between 1 and 24;
v' is a natural number between 1 and 24;
y is a natural number ≥1.

10. Co-Polymer according to claim 9, wherein
A is a branched or linear, saturated or non-saturated, optionally substituted divalent C₁₋₆ aliphatic group; preferably is optionally substituted alkylene; more preferably is - CH₂ -;
A' is a branched or linear, saturated or non-saturated, optionally substituted divalent C₁₋₆ aliphatic group; preferably is optionally substituted alkylene; more preferably is - CH₂ -;
and/or
v is a natural number between 3 and 13, preferably is a natural number between 5 and 11; more preferably is 5, 10 or 11, most preferably is 11 or 5;
v' is a natural number between 3 and 13, preferably is a natural number between 5 and 11; more preferably is 5, 10 or 11, most preferably is 11 or 5;
preferably,
if the pre-polyamide is a structure according to general formula III,
A is a branched or linear, saturated or non-saturated, optionally substituted divalent C₁₋₆ aliphatic group; preferably is optionally substituted alkylene; more preferably is -CH₂-;
and/or
v is a natural number between 3 and 13, preferably is a natural number between 5 and 11; more preferably is 5, 10 or 11, most preferably is 11.

11. Co-Polymer according to claim 1 wherein the pre-polyamide is selected from Nylon 6; Nylon 6,6; Nylon 11; or Nylon 12; preferably is Nylon 12;
and
the at least mono-substituted α-ω-di-carboxyloc acid is 3-tert. butyl adipic acid.

12. Co-Polymer according to any of claims 1 to 11, wherein the at least mono-substituted α-ω-di-carboxylic acid is - when producing the modified polyamide - added in an amount resulting in a molar ratio between the acid and the pre-polyamide calculated relatively based on the equivalent number of lactam Units in the pre-polyamide of
• between 0.05 and 0.0005, preferably between 0.025 and 0.001; or
• between 1.0 and 0.0005, preferably between 0.75 and 0.00075, and more preferably between 0.5 and 0.001, or between 0.05 and 0.004, or between 0.1 and 0.001.

13. Co-Polymer according to any of claims 1 to 11, wherein the at least mono-substituted α-ω-di-carboxylic acid is - when producing the modified polyamide - added in an amount resulting in a molar ratio between the acid and the pre-polyamide calculated relatively based on molecular weight of the polymerized amide building block (VIII) 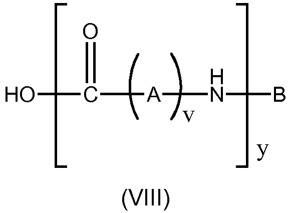
• between 0.05 and 0.0005, preferably between 0.025 and 0.001; or
• between 1.0 and 0.0005, preferably between 0.75 and 0.00075, and more preferably between 0.5 and 0.001, or between 0.05 and 0.004, or between 0.1 and 0.001.

14. Co-Polymer according to claim 1, **characterized in that** the modified polyamide is of general formula IV or IVa 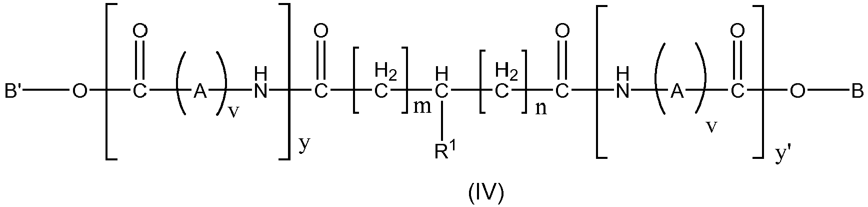 or 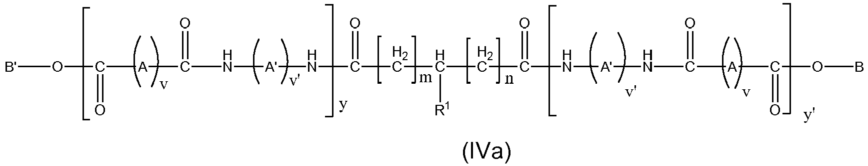 , preferably IV,
wherein
A is a divalent, branched or linear, saturated or non-saturated, optionally substituted hydrocarbon chain, with optionally one carbon atom being replaced by NH, O or S;
A' is a divalent, branched or linear, saturated or non-saturated, optionally substituted hydrocarbon chain, with optionally one carbon atom being replaced by NH, O or S;
B and B' independently from one another are selected from H or C₁₋₄-Alkyl;
v is a natural number between 1 and 24;
v' is a natural number between 1 and 24;
y is a natural number ≥1;
y' is a natural number ≥1 or 0;
m and n are independently from each other selected from 0 and a natural number between 1 and 9 and n + m is a natural number between 1 and 9; and
R¹ is any radical except hydrogen, preferably is a sterically voluminous group.

15. Co-Polymer according to claim 1, **characterized in that** the modified polyamide is of general formula V 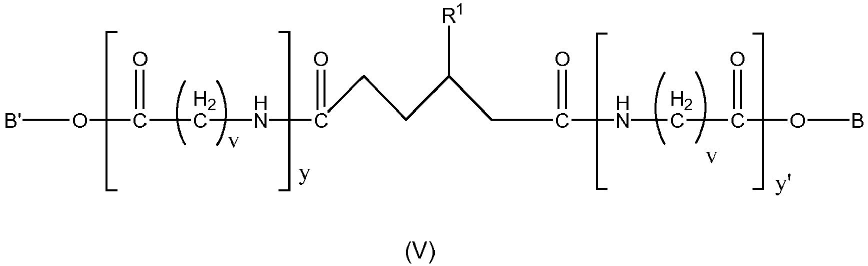 , wherein
B and B' independently from one another are selected from H or C₁₋₄-Alkyl;
v is a natural number between 1 and 24;
y is a natural number ≥1.
y' is a natural number ≥1 or 0;
R¹ is selected from halogen; a branched or linear, saturated or non-saturated, optionally substituted C₁₋₆ C₁₋₆ aliphatic radical; an optionally substituted aryl; a saturated or non-saturated, optionally substituted C₃₋₁₀-cycloalkyl; an optionally substituted heterocyclyl.

16. Co-Polymer according to any of claims 14 or 15, wherein the modified polyamide is acompound according to formulas IV or V, wherein
B and B' are hydrogen;
and/or
v is a natural number between 3 and 13, preferably is a natural number between 5 and 11; preferably is 5, 10 or 11, more preferably is 5 or 11, most preferably is 11;
and/or
y' is 0;
and/or
y + y' is between 20 and 2000, preferably 40 and 1000;
and/or
R¹ is selected from halogen; a branched or linear, saturated or non-saturated, optionally substituted C₁₋₄ alkyl-radical, preferably is iso-propyl or tert. butyl, more preferably is tert. butyl.

17. Co-Polymer device according to claim 16, wherein
v is 11;
and
R¹ is tert. butyl.

18. Co-Polymer device according to claim 1, wherein the polyether is a polyether diol of general formula VI or VIa 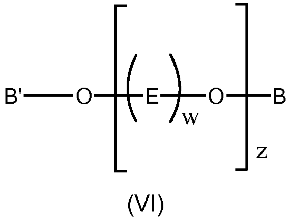 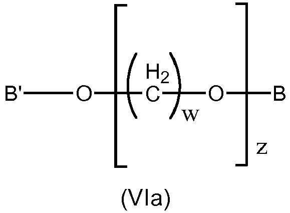 or wherein the polyether is a polyether diamine of general formula VII or VIIa 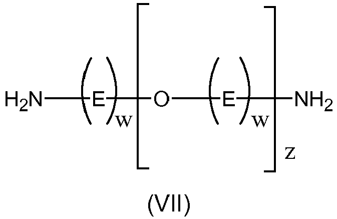 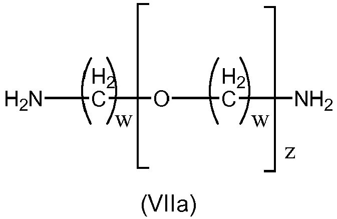 , wherein
E is a divalent, branched or linear, saturated or non-saturated, optionally substituted hydrocarbon chain;
B and B' independently from one another are selected from H or C₁₋₄-Alkyl;
w is a natural number between 1 and 24;
z is a natural number ≥1.

19. Co-Polymer according to claim 18, wherein the polyether is a polyether diol of general formula VIa or a polyether diamine of general formula VIIa, wherein
B and B' are hydrogen;
and/or
w is a natural number between 1 and 10; preferably if z =1, w is a natural number between 1 and 10 and if z ≠ 1, w is a natural number between 2 and 10;
and/or
z is a natural number between 1 and 2000, preferably between 2 and 2000, more preferably between 1 and 1000.

20. Co-Polymer according to any of claims 1 to 20, wherein
• either the reaction leading to the modified polyamide; or
• the polymerization reaction; or
• both reactions
is/are executed using reactive extrusion.

21. Co-Polymer according to general formula X, Xa, Xb, or Xc, XI, Xla, Xlb, or XIc 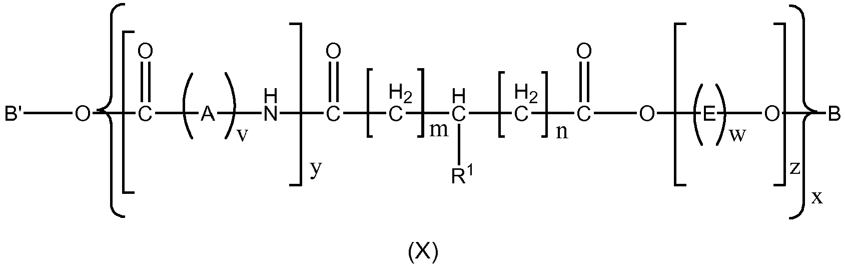 or 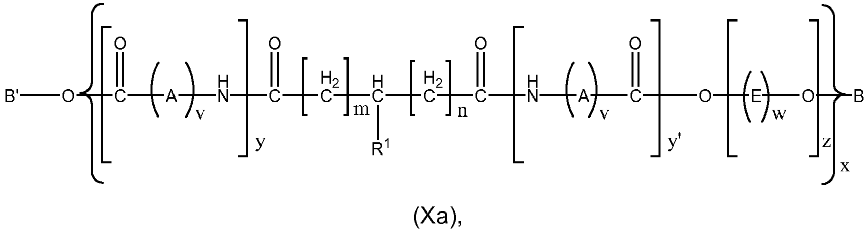 or 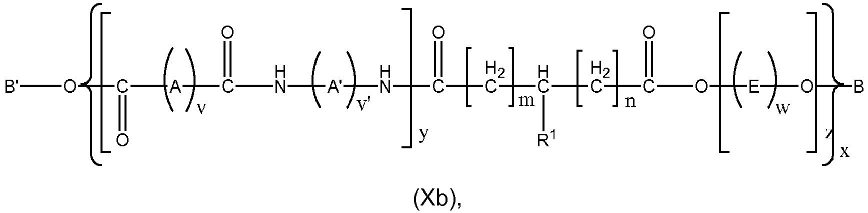 or 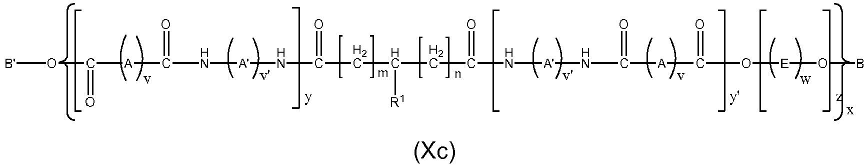 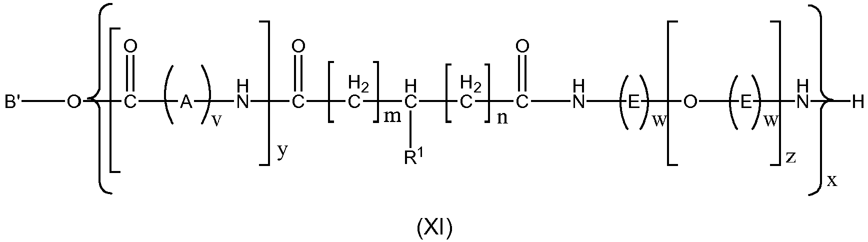 or 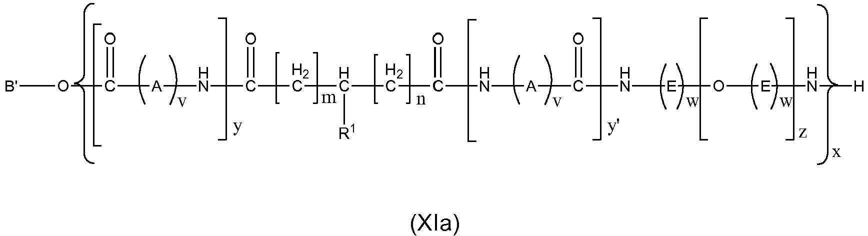 or 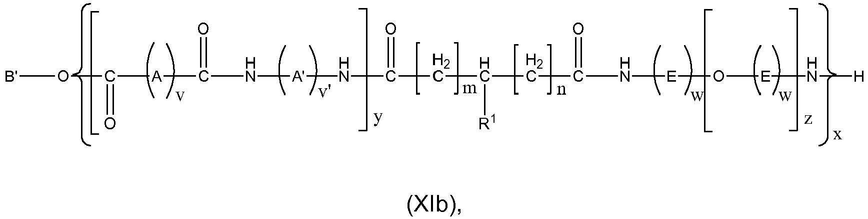 or 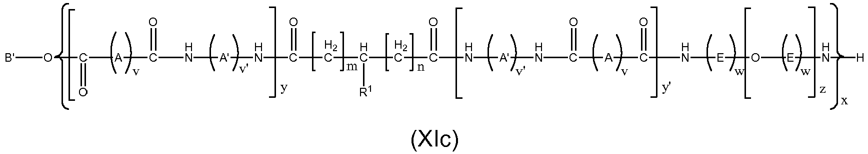 , wherein
A is a divalent, branched or linear, saturated or non-saturated, optionally substituted hydrocarbon chain, with optionally one carbon atom being replaced by NH, O or S;
A' is a divalent, branched or linear, saturated or non-saturated, optionally substituted hydrocarbon chain, with optionally one carbon atom being replaced by NH, O or S;
E is a divalent, branched or linear, saturated or non-saturated, optionally substituted hydrocarbon chain;
B and B' independently from one another are selected from H or C₁₋₄-Alkyl;
v is a natural number between 1 and 24;
v' is a natural number between 1 and 24;
w is a natural number between 1 and 24;
x is a natural number ≥1;
y and y' independently from another are a natural number ≥1;
z is a natural number ≥1;
m and n are independently from each other selected from 0 and a natural number between 1 and 9 and n + m is a natural number between 1 and 9; and
R¹ is any radical except hydrogen, preferably is a sterically voluminous group.

22. Co-Polymer according to claim 21 of general formula XII, or XIIa or XIII, or XIIIa 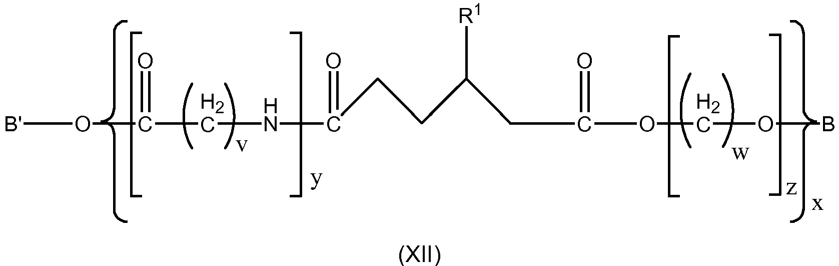 or 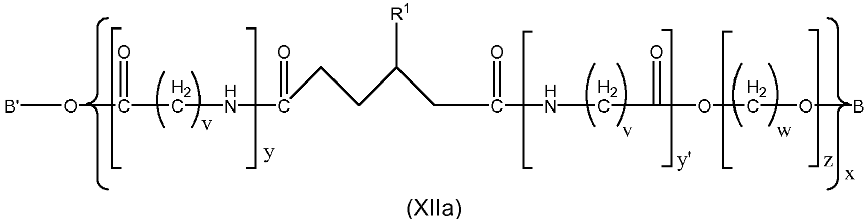 or 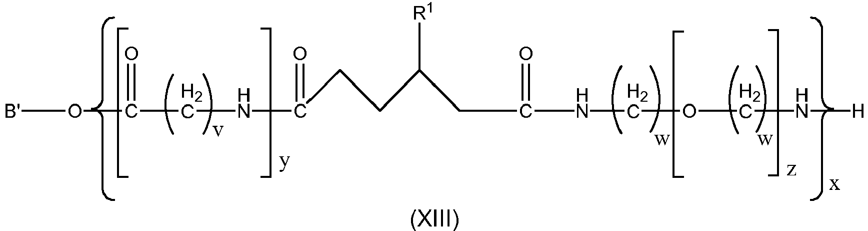 or 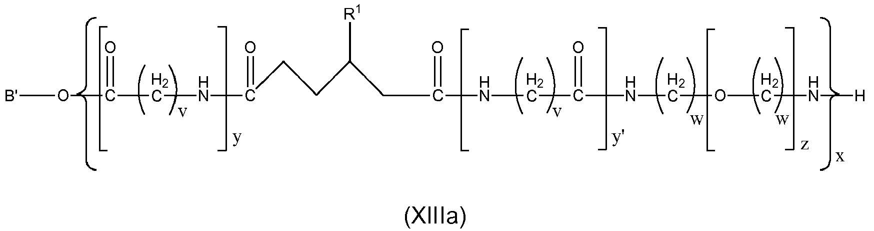 , wherein
B and B' independently from one another are selected from H or C₁₋₄- Alkyl;
v is a natural number between 1 and 24;
w is a natural number between 1 and 24;
x is a natural number ≥1;
y and y' are independently from one another a natural number ≥1;
z is a natural number ≥1;
R¹ is selected from halogen; a branched or linear, saturated or non- saturated, optionally substituted C₁₋₆ aliphatic radical; an optionally substituted aryl; a saturated or non-saturated, optionally substituted C₃₋₁₀- cycloalkyl; an optionally substituted heterocyclyl.

23. Co-Polymer according to any of claims 21 or 22, wherein
B and B' are hydrogen;
and/or
v is a natural number between 3 and 13, preferably is a natural number between 5 and 11; preferably is 5, 10 or 11, more preferably is 5 or 11, most preferably is 11;
and/or
w is a natural number between 1 and 10; preferably if z =1, w is a natural number between 1 and 10 and if z ≠ 1, w is a natural number between 2 and 10;
and/or
z is a natural number between 1 and 2000, preferably between 2 and 2000, more preferably between 1 and 1000;
and/or
y is a natural number between 1 and 2000, preferably 2 and 1000, more preferably between 2 and 200, even more preferably between 2 and 150, most preferably between 2 and 100;
and
y' is a natural number between 1 and 2000, preferably 2 and 1000, more preferably between 2 and 200, even more preferably between 2 and 150, most preferably between 2 and 100;
and
the sum of y + y' is a natural number between 1 and 2000, preferably between 2 and 1000, more preferably between 2 and 200, even more preferably between 2 and 150, most preferably between 2 and 100;
and/or
x is a natural number between 1 and 100;
and/or
R¹ is selected from halogen; a branched or linear, saturated or non-saturated, optionally substituted C₁₋₄ alkyl-radical, preferably is iso-propyl or tert. butyl, more preferably is tert. butyl.

24. Co-Polymer according to claim 23, wherein
v is 11;
and
R¹ is tert. butyl.

25. Co-Polymer according to any of claim 21 to 24, wherein the Co-Polymer is modified in at least one of the end groups B with liquid crystalline oligomers (LCOs/LC-oligomers).

26. Use of a Co-Polymer according to any of claims 1 to 20 or 21 to 25 in the production of implants or medical devices, preferably implanted or implantable medical devices, more preferably for the production of balloon/balloon material, of stents, stent grafts, grafts graft connectors or catheters.

27. Implant or medical device comprising a Co-Polymer according to any of claims 1 to 20 or 21 to 25.

28. Implant according to claim 27 wherein the implant or medical device is selected from implanted or implantable medical devices, preferably from balloon/balloon material, stents, stent grafts, grafts graft connectors or catheters.

## Patentansprüche

1. Copolymer, herstellbar durch Polymerisieren eines modifizierten Polyamids mit einem Polyetherdiol oder einem Polyetherdiamin, **dadurch gekennzeichnet, dass** das modifizierte Polyamid durch Inkontaktbringen/Mischen eines oder mehrerer Präpolyamide mit einer mindestens einfach substituierten α,ω-Dicarbonsäure oder ihrem Alkylester oder ihren Acylhalogeniden und Erhöhen der Temperatur auf über 150 °C herstellbar ist.

2. Copolymer nach Anspruch 1, wobei die Polymerisation durch Inkontaktbringen des modifizierten Polyamids mit dem Polyetherdiol oder Polyetherdiamin erfolgt, vorzugsweise in Gegenwart eines Katalysators, vorzugsweise einer Lewis-Base oder einer Lewis-Säure, und unter Erhöhen der Temperatur auf
a) entweder über 150 °C im Falle einer Schmelzpolymerisation oder
b) über 50 °C im Falle einer Lösungspolymerisation.

3. Copolymer nach einem der Ansprüche 1 oder 2, wobei die mindestens einfach substituierte α,ω-Dicarbonsäure aus einer mindestens einfach substituierten Oxalsäure (2), Malonsäure (3), Bernsteinsäure (4), Fumarsäure (4), Glutarsäure (5), Adipinsäure, 1,7-Heptandicarbonsäure, 1,8-Octandicarbonsäure, 1,9-Nonandicarbonsäure, 1,10-Decandicarbonsäure, 1,11-Undecandicarbonsäure, 1,12-Dodecandicarbonsäure; vorzugsweise aus mindestens einfach substituierter Adipinsäure oder 1,10-Decandicarbonsäure ausgewählt ist.

4. Copolymer nach einem der Ansprüche 1 bis 2, wobei die mindestens einfach substituierte α,ω-Dicarbonsäure eine Verbindung der allgemeinen Formel I ist,
HOOC-(CH₂)ₘ-CHR¹-(CH₂)ₙ-COR² (I)
worin
m und n unabhängig voneinander aus einer natürlichen Zahl und 0 ausgewählt sind und n + m zwischen 1 und 9, vorzugsweise zwischen 3 und 7 liegt;
R² aus OH, Halogen oder OC₁₋₄-Alkyl ausgewählt ist;
R¹ ein beliebiges Radikal außer Wasserstoff ist, vorzugsweise eine sterisch voluminöse Gruppe ist.

5. Copolymer nach Anspruch 4, wobei
entweder
m und n unabhängig voneinander aus 0, 1, 2 oder 3 ausgewählt sind und n + m 3 ist;
oder
m und n unabhängig voneinander aus 0, 1, 2, 3, 4, 5, 6 oder 7 ausgewählt sind und n + m 7 ist;
worin vorzugsweise
m und n unabhängig voneinander aus 0, 1, 2 oder 3 ausgewählt sind und n + m 3 ist.

6. Copolymer nach einem der Ansprüche 1 bis 2, wobei die mindestens einfach substituierte α,ω-Dicarbonsäure eine Verbindung der allgemeinen Formel (II) ist, 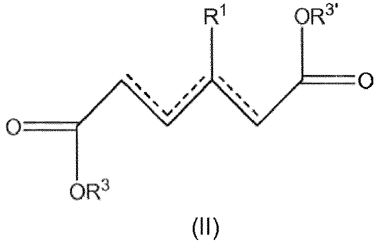 worin
eines von R^{3'} und R³ aus Wasserstoff ausgewählt ist, während das andere entweder Wasserstoff oder C₁₋₄-Alkyl sein kann;
0, 1 oder 2 der Bindungen, die durch eine gepunktete Linie .......... markiert sind, eine Doppelbindung sein können, mit der Maßgabe, dass, wenn es 2 Doppelbindungen gibt, diese nicht dasselbe C-Atom berühren;
R¹ ein beliebiges Radikal außer Wasserstoff, vorzugsweise eine sterisch voluminöse Gruppe, ist.

7. Copolymer nach einem der Ansprüche 4 bis 6, wobei
R¹ aus Halogen; einem verzweigten oder linearen, gesättigten oder ungesättigten, wahlweise substituierten aliphatischen C₁₋₆-Radikal, einem wahlweise substituierten Aryl; einem gesättigten oder ungesättigten, wahlweise substituierten C₃₋₁₀-Cycloalkyl, einem wahlweise substituierten Heterocyclyl ausgewählt ist.

8. Copolymer nach einem der Ansprüche 1 bis 7, wobei die mindestens einfach substituierte α,ω-Dicarbonsäure 3-tert-Butyladipinsäure ist.

9. Copolymer nach Anspruch 1, wobei das Präpolyamid eine Struktur der allgemeinen Formel III oder IIIa ist, 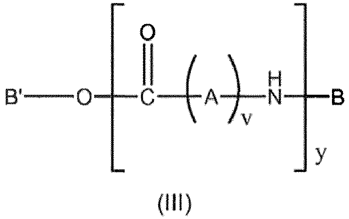 oder 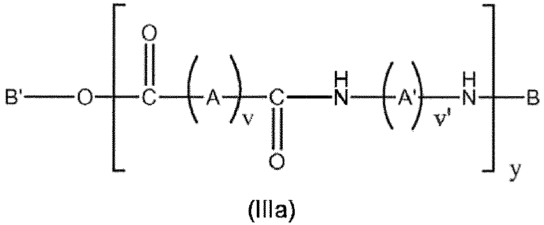 vorzugsweise eine Struktur der allgemeinen Formel III,
worin
A eine zweiwertige, verzweigte oder lineare, gesättigte oder ungesättigte, wahlweise substituierte Kohlenwasserstoffkette ist, wobei wahlweise ein Kohlenstoffatom durch NH, O oder S ersetzt ist;
A' eine zweiwertige, verzweigte oder lineare, gesättigte oder ungesättigte, wahlweise substituierte Kohlenwasserstoffkette ist, wobei wahlweise ein Kohlenstoffatom durch NH, O oder S ersetzt ist;
B und B' unabhängig voneinander aus H oder C₁₋₄-Alkyl ausgewählt sind;
v eine natürliche Zahl zwischen 1 und 24 ist;
v' eine natürliche Zahl zwischen 1 und 24 ist;
y eine natürliche Zahl ≥1 ist.

10. Copolymer nach Anspruch 9, wobei
A eine verzweigte oder lineare, gesättigte oder ungesättigte, wahlweise substituierte zweiwertige aliphatische Gruppe ist; vorzugsweise wahlweise substituiertes Alkylen ist; besonders bevorzugt -CH₂- ist;
A' eine verzweigte oder lineare, gesättigte oder ungesättigte, wahlweise substituierte zweiwertige aliphatische Gruppe ist; vorzugsweise wahlweise substituiertes Alkylen ist; besonders bevorzugt -CH₂- ist;
und/oder
v eine natürliche Zahl zwischen 3 und 13 ist, vorzugsweise eine natürliche Zahl zwischen 5 und 11 ist; besonders bevorzugt 5, 10 oder 11 ist, am meisten bevorzugt 11 oder 5 ist;
v' eine natürliche Zahl zwischen 3 und 13 ist, vorzugsweise eine natürliche Zahl zwischen 5 und 11 ist; besonders bevorzugt 5, 10 oder 11 ist, am meisten bevorzugt 11 oder 5 ist;
wobei vorzugsweise,
wenn das Präpolyamid eine Struktur gemäß der allgemeinen Formel III ist,
A eine verzweigte oder lineare, gesättigte oder ungesättigte, wahlweise substituierte zweiwertige aliphatische Gruppe ist; vorzugsweise wahlweise substituiertes Alkylen ist; besonders bevorzugt -CH₂- ist;
und/oder
v' eine natürliche Zahl zwischen 3 und 13 ist, vorzugsweise eine natürliche Zahl zwischen 5 und 11 ist; besonders bevorzugt 5, 10 oder 11 ist, am meisten bevorzugt 11 ist.

11. Copolymer nach Anspruch 1, wobei das Präpolyamid aus Nylon 6; Nylon 6,6; Nylon 11; oder Nylon 12 ausgewählt ist; vorzugsweise Nylon 12 ist;
und
die mindestens einfach substituierte α,ω-Dicarbonsäure 3-tert-Butyladipinsäure ist.

12. Copolymer nach einem der Ansprüche 1 bis 11, wobei die mindestens einfach substituierte α,ω-Dicarbonsäure - bei Herstellung des modifizierten Polyamids - in einer Menge zugegeben wird, die ein Molverhältnis zwischen der Säure und dem Präpolyamid, berechnet relativ auf der Grundlage der Äquivalentzahl von Lactameinheiten in dem Präpolyamid, wie folgt ergibt
• zwischen 0,05 und 0,0005, vorzugsweise zwischen 0,025 und 0,001; oder
• zwischen 1,0 und 0,0005, vorzugsweise zwischen 0,75 und 0,00075, und besonders bevorzugt zwischen 0,5 und 0,001, oder zwischen 0,05 und 0,004, oder zwischen 0,1 und 0,001.

13. Copolymer nach einem der Ansprüche 1 bis 11, wobei die mindestens einfach substituierte α,ω-Dicarbonsäure - bei Herstellung des modifizierten Polyamids - in einer Menge zugegeben wird, die ein Molverhältnis zwischen der Säure und dem Präpolyamid, berechnet relativ auf der Grundlage des Molekulargewichts des polymerisierten Amid-Grundblocks (VIII), wie folgt ergibt 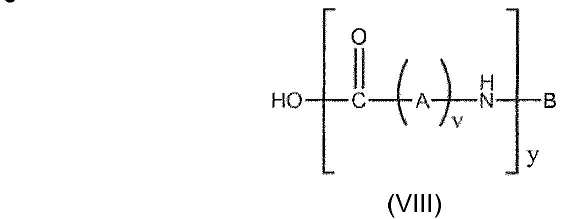
• zwischen 0,05 und 0,0005, vorzugsweise zwischen 0,025 und 0,001;
oder
• zwischen 1,0 und 0,0005, vorzugsweise zwischen 0,75 und 0,00075, und besonders bevorzugt zwischen 0,5 und 0,001, oder zwischen 0,05 und 0,004, oder zwischen 0,1 und 0,001.

14. Copolymer nach Anspruch 1, **dadurch gekennzeichnet, dass** das modifizierte Polyamid von der allgemeinen Formel IV oder IVa ist, 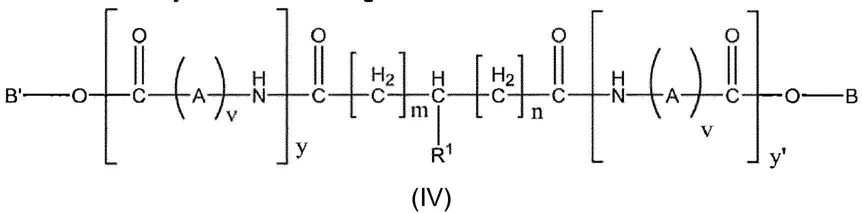 oder 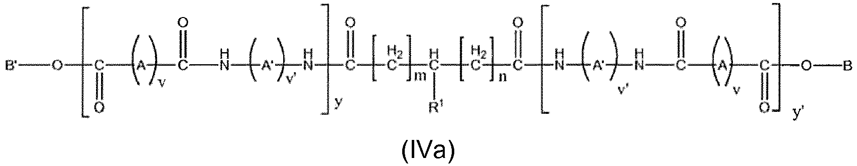 vorzugsweise IV,
worin
A eine zweiwertige, verzweigte oder lineare, gesättigte oder ungesättigte, wahlweise substituierte Kohlenwasserstoffkette ist, wobei wahlweise ein Kohlenstoffatom durch NH, O oder S ersetzt ist;
A' eine zweiwertige, verzweigte oder lineare, gesättigte oder ungesättigte, wahlweise substituierte Kohlenwasserstoffkette ist, wobei wahlweise ein Kohlenstoffatom durch NH, O oder S ersetzt ist;
B und B' unabhängig voneinander aus H oder C₁₋₄-Alkyl ausgewählt sind;
v eine natürliche Zahl zwischen 1 und 24 ist;
v' eine natürliche Zahl zwischen 1 und 24 ist;
y eine natürliche Zahl ≥1 ist;
y' eine natürliche Zahl ≥1 oder 0 ist;
m und n unabhängig voneinander aus 0 und einer natürlichen Zahl zwischen 1 und 9 ausgewählt sind und n + m eine natürliche Zahl zwischen 1 und 9 ist; und
R¹ ein beliebiges Radikal außer Wasserstoff ist, vorzugsweise eine sterisch voluminöse Gruppe ist.

15. Copolymer nach Anspruch 1, **dadurch gekennzeichnet, dass** das modifizierte Polyamid von der allgemeinen Formel V ist, 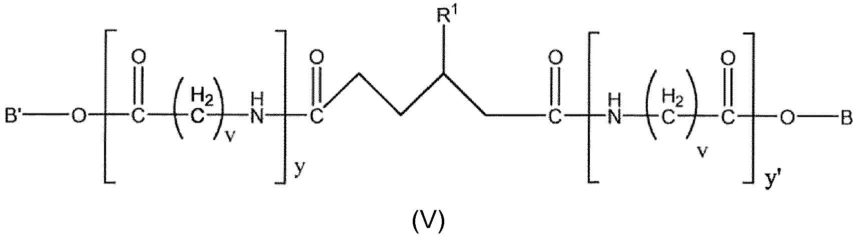 worin
B und B' unabhängig voneinander aus H oder C₁₋₄-Alkyl ausgewählt sind; v eine natürliche Zahl zwischen 1 und 24 ist;
y eine natürliche Zahl ≥1 ist;
y' eine natürliche Zahl ≥1 oder 0 ist;
R¹ aus Halogen; einem verzweigten oder linearen, gesättigten oder ungesättigten, wahlweise substituierten aliphatischen C₁₋₆-Radikal, einem wahlweise substituierten Aryl; einem gesättigten oder ungesättigten, wahlweise substituierten C₃₋₁₀-Cycloalkyl, einem wahlweise substituierten Heterocyclyl ausgewählt ist.

16. Copolymer nach einem der Ansprüche 14 oder 15, wobei das modifizierte Polyamid eine Verbindung gemäß Formel IV oder V ist, worin
B und B' Wasserstoff sind;
und/oder
v eine natürliche Zahl zwischen 3 und 13 ist, vorzugsweise eine natürliche Zahl zwischen 5 und 11 ist; vorzugsweise 5, 10 oder 11 ist, besonders bevorzugt 5 oder 11 ist, am meisten bevorzugt 11 ist;
und/oder
y' 0 ist;
und/oder
y + y' zwischen 20 und 2000, vorzugsweise 40 und 1000 ist;
und/oder
R¹ aus Halogen; einem verzweigten oder linearen, gesättigten oder ungesättigten, wahlweise substituierten C₁₋₄-Alkylradikal ausgewählt ist, vorzugsweise Isopropyl oder tert-Butyl ist, besonders bevorzugt tert-Butyl ist.

17. Copolymervorrichtung nach Anspruch 16, wobei
v 11 ist;
und
R¹ tert-Butyl ist.

18. Copolymervorrichtung nach Anspruch 1, wobei der Polyether ein Polyetherdiol der allgemeinen Formel VI oder VIa ist, 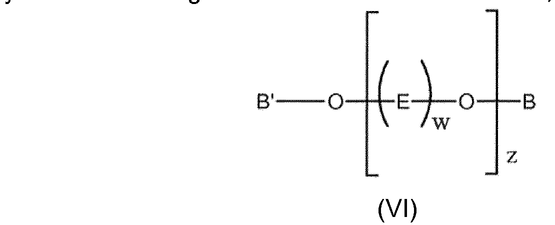 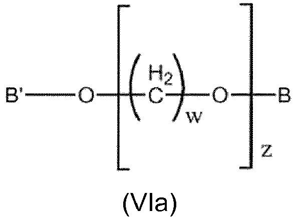 oder wobei der Polyether ein Polyetherdiamin der allgemeinen Formel VII oder VIIa ist, 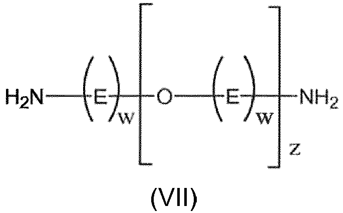 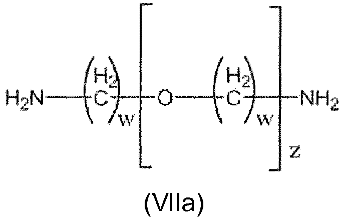 worin
E eine zweiwertige, verzweigte oder lineare, gesättigte oder ungesättigte, wahlweise substituierte Kohlenwasserstoffkette ist;
B und B' unabhängig voneinander aus H oder C₁₋₄-Alkyl ausgewählt sind; w eine natürliche Zahl zwischen 1 und 24 ist;
z eine natürliche Zahl ≥1 ist.

19. Copolymer nach Anspruch 18, wobei der Polyether ein Polyetherdiol der allgemeinen Formel VIa oder ein Polyetherdiamin der allgemeinen Formel VIIa ist, worin
B und B' Wasserstoff sind;
und/oder
w eine natürliche Zahl zwischen 1 und 10 ist; vorzugsweise, wenn z =1, w eine natürliche Zahl zwischen 1 und 10 ist und, wenn z ≠1, w eine natürliche Zahl zwischen 2 und 10 ist;
und/oder
z eine natürliche Zahl zwischen 1 und 2000, vorzugsweise zwischen 2 und 2000, besonders bevorzugt zwischen 1 und 1000 ist.

20. Copolymer nach einem der Ansprüche 1 bis 20, wobei
• entweder die Reaktion, die das modifizierte Polyamid ergibt; oder
• die Polymerisationsreaktion; oder
• beide Reaktionen
mittels Reaktivextrusion ausgeführt werden.

21. Copolymer gemäß der allgemeinen Formel X, Xa, Xb, oder Xc, XI, XIa, XIb oder XIc 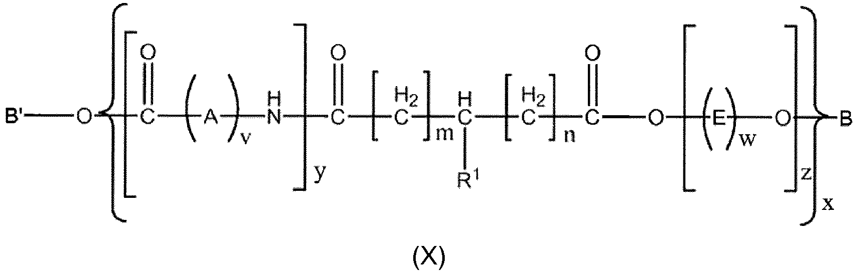 oder 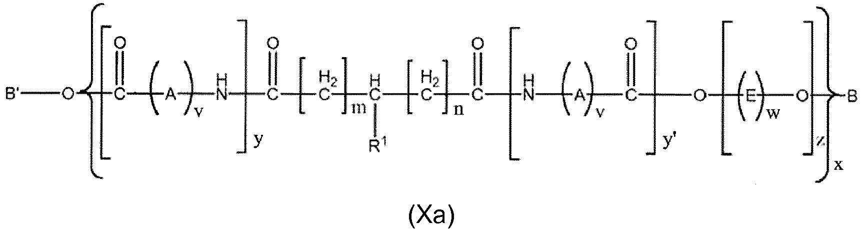 oder 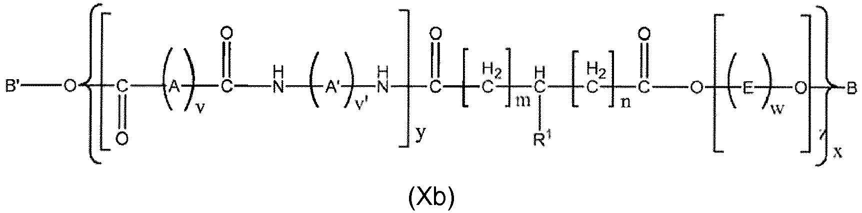 oder 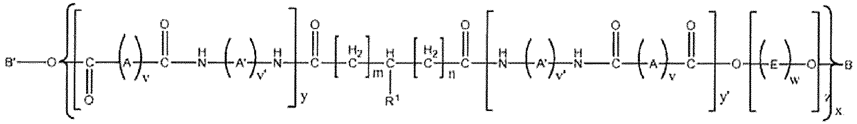 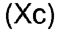 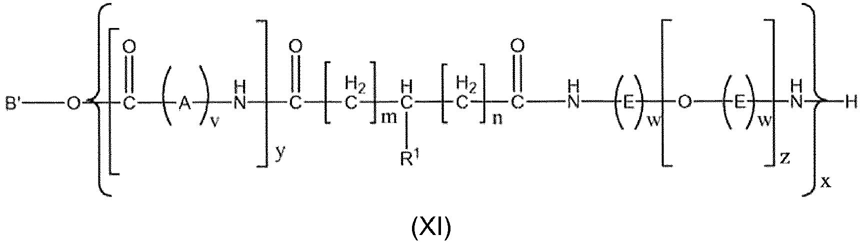 oder 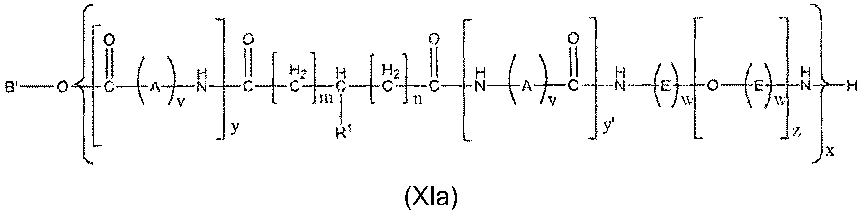 oder 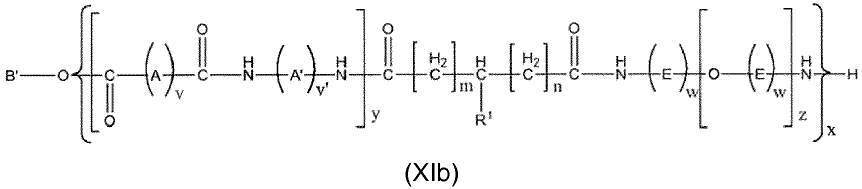 oder 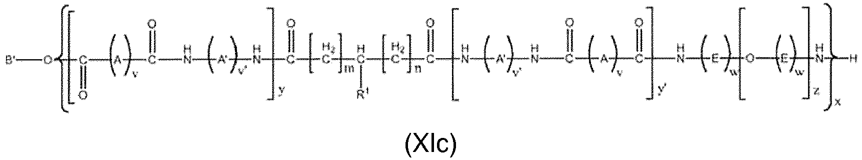 worin
A eine zweiwertige, verzweigte oder lineare, gesättigte oder ungesättigte, wahlweise substituierte Kohlenwasserstoffkette ist, wobei wahlweise ein Kohlenstoffatom durch NH, O oder S ersetzt ist;
A' eine zweiwertige, verzweigte oder lineare, gesättigte oder ungesättigte, wahlweise substituierte Kohlenwasserstoffkette ist, wobei wahlweise ein Kohlenstoffatom durch NH, O oder S ersetzt ist;
E eine zweiwertige, verzweigte oder lineare, gesättigte oder ungesättigte, wahlweise substituierte Kohlenwasserstoffkette ist;
B und B' unabhängig voneinander aus H oder C₁₋₄-Alkyl ausgewählt sind;
v eine natürliche Zahl zwischen 1 und 24 ist;
v' eine natürliche Zahl zwischen 1 und 24 ist;
w eine natürliche Zahl zwischen 1 und 24 ist;
x eine natürliche Zahl ≥1 ist;
y und y' unabhängig voneinander eine natürliche Zahl ≥1 sind;
z eine natürliche Zahl ≥1 ist;
m und n unabhängig voneinander aus 0 und einer natürlichen Zahl zwischen 1 und 9 ausgewählt sind und n + m eine natürliche Zahl zwischen 1 und 9 ist; und
R¹ ein beliebiges Radikal außer Wasserstoff ist, vorzugsweise eine sterisch voluminöse Gruppe ist.

22. Copolymer nach Anspruch 21 der allgemeinen Formel XII oder XIIa oder XIII oder XIIIa 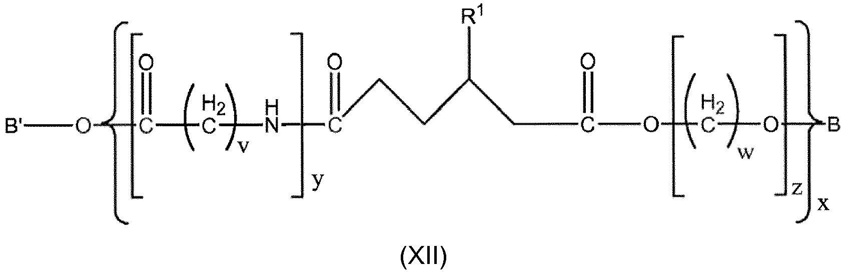 oder 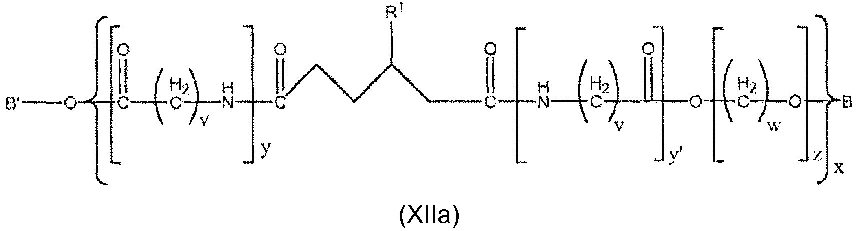 oder 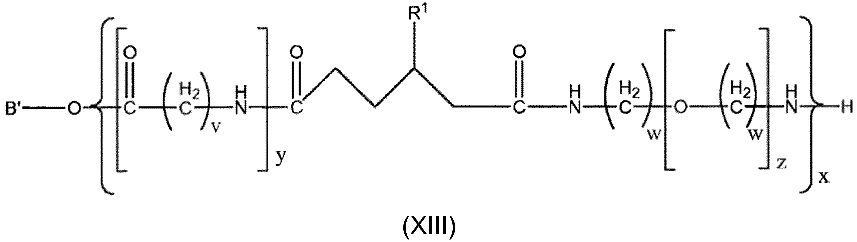 oder 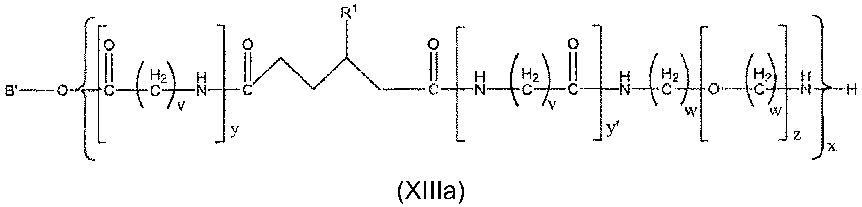 worin
B und B' unabhängig voneinander aus H oder C₁₋₄-Alkyl ausgewählt sind;
v eine natürliche Zahl zwischen 1 und 24 ist;
w eine natürliche Zahl zwischen 1 und 24 ist;
x eine natürliche Zahl ≥1 ist;
y und y' unabhängig voneinander eine natürliche Zahl ≥1 sind;
z eine natürliche Zahl ≥1 ist;
R¹ aus Halogen; einem verzweigten oder linearen, gesättigten oder ungesättigten, wahlweise substituierten aliphatischen C₁₋₆-Radikal; einem wahlweise substituierten Aryl; einem gesättigten oder ungesättigten, wahlweise substituierten C₃₋₁₀-Cycloalkyl, einem wahlweise substituierten Heterocyclyl ausgewählt ist.

23. Copolymer nach einem der Ansprüche 21 oder 22, wobei
B und B' Wasserstoff sind;
und/oder
v eine natürliche Zahl zwischen 3 und 13 ist, vorzugsweise eine natürliche Zahl zwischen 5 und 11 ist; vorzugsweise 5, 10 oder 11 ist, besonders bevorzugt 5 oder 11 ist, am meisten bevorzugt 11 ist;
und/oder
w eine natürliche Zahl zwischen 1 und 10 ist; vorzugsweise, wenn z =1, w eine natürliche Zahl zwischen 1 und 10 ist und, wenn z ≠1, w eine natürliche Zahl zwischen 2 und 10 ist;
und/oder
z eine natürliche Zahl zwischen 1 und 2000, vorzugsweise zwischen 2 und 2000, besonders bevorzugt zwischen 1 und 1000 ist;
und/oder
y eine natürliche Zahl zwischen 1 und 2000, vorzugsweise 2 und 1000, besonders bevorzugt zwischen 2 und 200, noch mehr bevorzugt zwischen 2 und 150, am meisten bevorzugt zwischen 2 und 100 ist;
und
y' eine natürliche Zahl zwischen 1 und 2000, vorzugsweise 2 und 1000, besonders bevorzugt zwischen 2 und 200, noch mehr bevorzugt zwischen 2 und 150, am meisten bevorzugt zwischen 2 und 100 ist;
und
die Summe von y + y' eine natürliche Zahl zwischen 1 und 2000, vorzugsweise zwischen 2 und 1000, besonders bevorzugt zwischen 2 und 200, noch mehr bevorzugt zwischen 2 und 150, am meisten bevorzugt zwischen 2 und 100 ist;
und/oder
x eine natürliche Zahl zwischen 1 und 100 ist;
und/oder
R¹ aus Halogen; einem verzweigten oder linearen, gesättigten oder ungesättigten, wahlweise substituierten C₁₋₄-Alkylradikal ausgewählt ist, vorzugsweise Isopropyl oder tert-Butyl ist, besonders bevorzugt tert-Butyl ist.

24. Copolymer nach Anspruch 23, wobei
v 11 ist;
und
R¹ tert-Butyl ist.

25. Copolymer nach einem der Ansprüche 21 bis 24, wobei das Co-polymer in mindestens einer der Endgruppen B mit flüssigen kristallinen Oligomeren (LCOs/LC-Oligomeren) modifiziert ist.

26. Verwendung eines Copolymers nach einem der Ansprüche 1 bis 20 oder 21 bis 25 bei der Herstellung von Implantaten oder medizinischen Vorrichtungen, vorzugsweise implantierten oder implantierbaren medizinischen Vorrichtungen, besonders bevorzugt für die Herstellung von Ballon/Ballonmaterial, von Stents, Stentgrafts, Grafts Graftverbindungen oder Kathetern.

27. Implantat oder medizinische Vorrichtung, umfassend ein Copolymer nach einem der Ansprüche 1 bis 20 oder 21 bis 25.

28. Implantat nach Anspruch 27, wobei das Implantat oder die medizinische Vorrichtung aus implantierten oder implantierbaren medizinischen Vorrichtungen ausgewählt ist, vorzugsweise aus Ballon/Ballonmaterial, Stents, Stentgrafts, Grafts Graftverbindungen oder Kathetern.

## Revendications

1. Copolymère pouvant être obtenu par polymérisation d'un polyamide modifié avec un polyéther diol ou une polyéther diamine, **caractérisé en ce que** le polyamide modifié peut être obtenu par mise en contact/mélange d'un ou plusieurs pré-polyamides avec un acide α,ω-di-carboxylique au moins mono-substitué ou son ester d'alkyle ou ses halogénures d'acyle et élévation de la température à plus de 150 °C.

2. Copolymère selon la revendication 1, dans lequel la polymérisation est faite par mise en contact du polyamide modifié avec le polyéther diol ou la polyéther diamine, de préférence en présence d'un catalyseur, de préférence une base de Lewis ou un acide de Lewis et élévation de la température à
a) soit plus de 150 °C en cas de polymérisation en fusion soit
b) plus de 50 °C en cas de polymérisation en solution.

3. Copolymère selon l'une quelconque des revendications 1 ou 2, dans lequel l'acide α,ω-di-carboxylique au moins mono-substitué est choisi parmi de l'acide oxalique (2), de l'acide malonique (3), de l'acide succinique (4), de l'acide fumarique (4), de l'acide glutarique (5), de l'acide adipique, de l'acide 1,7-heptane-dicarboxylique, de l'acide 1,8-octane-di-carboxylique, de l'acide 1,9-nonane-di-carboxylique, de l'acide 1,10-décane-di-carboxylique, de l'acide 1,11-undécane-di-carboxylique, de l'acide 1,12-dodécane-di-carboxylique, au moins mono-substitué; de préférence parmi de l'acide adipique ou de l'acide 1,10-décane-di-carboxylique au moins mono-substitué.

4. Copolymère selon l'une quelconque des revendications 1 à 2, dans lequel l'acide α,ω-di-carboxylique au moins mono-substitué est un composé de formule générale I
HOOC-(CH₂)ₘ-CHR¹-(CH₂)ₙ-COR² (I)
dans lequel
m et n sont indépendamment l'un de l'autre choisis parmi un nombre naturel et 0 et n + m est compris entre 1 et 9, de préférence entre 3 et 7 ;
R² est choisi parmi OH, halogène ou O-alkyle en C_{1 à 4} ;
R¹ est n'importe quel radical à l'exception de l'hydrogène, de préférence est un groupe stériquement volumineux.

5. Copolymère selon la revendication 4, dans lequel
soit
m et n sont indépendamment l'un de l'autre choisis parmi 0, 1, 2 ou 3 et n + m est 3 ;
soit
m et n sont indépendamment l'un de l'autre choisis parmi 0, 1, 2, 3, 4, 5, 6 ou 7 et n + m est 7 ;
de préférence dans lequel
m et n sont indépendamment l'un de l'autre choisis parmi 0, 1, 2 ou 3 et n + m est 3.

6. Copolymère selon l'une quelconque des revendications 1 à 2, dans lequel l'acide α,ω-di-carboxylique au moins mono-substitué est un composé de formule générale (II) 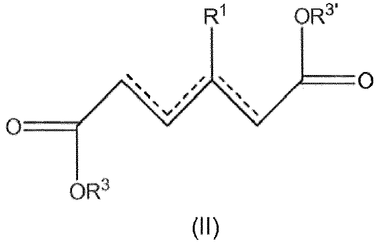 dans lequel
l'un de R^{3'} et R³ est choisi parmi l'hydrogène, alors que l'autre peut être soit l'hydrogène soit un alkyle en C_{1 à 4} ;
0, 1 ou 2 des liaisons marquées par une ligne en pointillés .......... peuvent être une double liaison, à condition que s'il y a 2 doubles liaisons, elles ne puissent pas toucher le même atome de C ;
R¹ est n'importe quel radical à l'exception de l'hydrogène, de préférence est un groupe stériquement volumineux.

7. Copolymère selon l'une quelconque des revendications 4 à 6, dans lequel
R¹ est choisi parmi un halogène ; un radical aliphatique en C_{1 à 6} ramifié ou linéaire, saturé ou non saturé, éventuellement substitué ; un aryle éventuellement substitué ; un cycloalkyle en C_{3 à 10} saturé ou non saturé, éventuellement substitué ; un hétérocyclyle éventuellement substitué.

8. Copolymère selon l'une quelconque des revendications 1 à 7, dans lequel l'acide α,ω-di-carboxylique au moins mono-substitué est l'acide 3-tert. butyl-adipique.

9. Copolymère selon la revendication 1, dans lequel le pré-polyamide est une structure de formule générale III ou IIIa 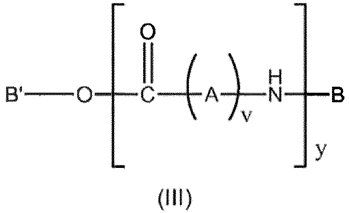 ou 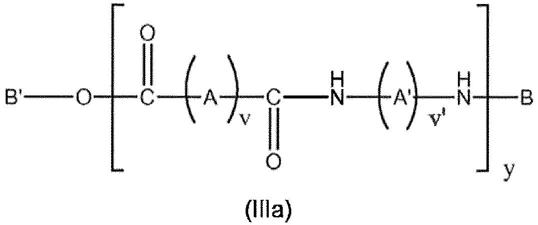 , de préférence une structure de formule générale III
, dans lequel
A est une chaîne hydrocarbonée divalente, ramifiée ou linéaire, saturée ou non saturée, éventuellement substituée, avec éventuellement un atome de carbone étant remplacé par NH, O ou S ;
A' est une chaîne hydrocarbonée divalente, ramifiée ou linéaire, saturée ou non saturée, éventuellement substituée, avec éventuellement un atome de carbone étant remplacé par NH, O ou S ;
B et B' indépendamment l'un de l'autre sont choisis parmi H ou un alkyle en C_{1 à 4} ;
v est un nombre naturel entre 1 et 24 ;
v' est un nombre naturel entre 1 et 24 ;
y est un nombre naturel ≥1.

10. Copolymère selon la revendication 9, dans lequel
A est un groupe aliphatique divalent ramifié ou linéaire, saturé ou non saturé, éventuellement substitué ; de préférence est un alcylène éventuellement substitué ; plus préférablement est - CH₂ - ;
A' est un groupe aliphatique divalent ramifié ou linéaire, saturé ou non saturé, éventuellement substitué ; de préférence est un alcylène éventuellement substitué ; plus préférablement est - CH₂ - ;
et/ou
v est un nombre naturel entre 3 et 13, de préférence est un nombre naturel entre 5 et 11 ; plus préférablement est 5, 10 ou 11, le plus préférablement est 11 ou 5 ;
v' est un nombre naturel entre 3 et 13, de préférence est un nombre naturel entre 5 et 11 ; plus préférablement est 5, 10 ou 11, le plus préférablement est 11 ou 5 ;
de préférence,
si le pré-polyamide est une structure selon la formule générale III,
A est un groupe aliphatique divalent ramifié ou linéaire, saturé ou non saturé, éventuellement substitué ; de préférence est un alcylène éventuellement substitué ; plus préférablement est - CH₂ - ;
et/ou
v est un nombre naturel entre 3 et 13, de préférence est un nombre naturel entre 5 et 11 ; plus préférablement est 5, 10 ou 11, le plus préférablement est 11.

11. Copolymère selon la revendication 1, dans lequel le pré-polyamide est choisi parmi le Nylon 6 ; le Nylon 6,6 ; le Nylon 11 ; ou le Nylon 12 ; de préférence est le Nylon 12 ;
et
l'acide α,ω-di-carboxylique au moins mono-substitué est l'acide 3-tert. butyl-adipique.

12. Copolymère selon l'une quelconque des revendications 1 à 11, dans lequel l'acide α,ω-di-carboxylique au moins mono-substitué est - lors de la production du polyamide modifié - ajouté en une quantité entraînant un rapport molaire entre l'acide et le pré-polyamide calculé de manière relative sur la base du nombre équivalent de motifs lactame dans le pré-polyamide de
• entre 0,05 et 0,0005, de préférence entre 0,025 et 0,001 ; ou
• entre 1,0 et 0,0005, de préférence entre 0,75 et 0,00075, et plus préférablement entre 0,5 et 0,001, ou entre 0,05 et 0,004, ou entre 0,1 et 0,001.

13. Copolymère selon l'une quelconque des revendications 1 à 11, dans lequel l'acide α,ω-di-carboxylique au moins mono-substitué est - lors de la production du polyamide modifié - ajouté en une quantité entraînant un rapport molaire entre l'acide et le pré-polyamide calculé de manière relative sur la base de la masse moléculaire de l'élément constitutif amide polymérisé (VIII) 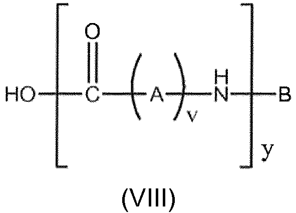
• entre 0,05 et 0,0005, de préférence entre 0,025 et 0,001 ; ou
• entre 1,0 et 0,0005, de préférence entre 0,75 et 0,00075, et plus préférablement entre 0,5 et 0,001, ou entre 0,05 et 0,004, ou entre 0,1 et 0,001.

14. Copolymère selon la revendication 1, **caractérisé en ce que** le polyamide modifié est de formule générale IV ou IVa 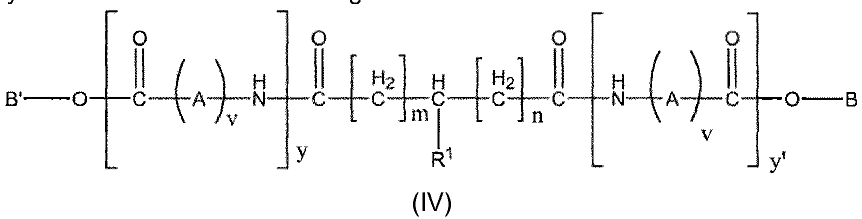 ou 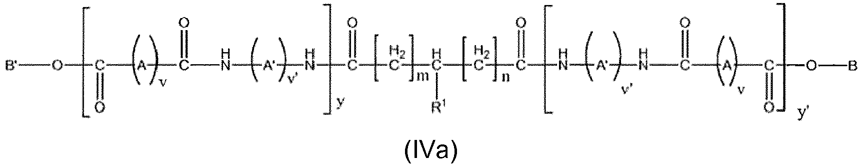 , de préférence IV,
dans lequel
A est une chaîne hydrocarbonée divalente, ramifiée ou linéaire, saturée ou non saturée, éventuellement substituée, avec éventuellement un atome de carbone étant remplacé par NH, O ou S ;
A' est une chaîne hydrocarbonée divalente, ramifiée ou linéaire, saturée ou non saturée, éventuellement substituée, avec éventuellement un atome de carbone étant remplacé par NH, O ou S ;
B et B' indépendamment l'un de l'autre sont choisis parmi H ou un alkyle en C_{1 à 4} ;
v est un nombre naturel entre 1 et 24 ;
v' est un nombre naturel entre 1 et 24 ;
y est un nombre naturel ≥1 ;
y' est un nombre naturel ≥1 ou 0 ;
m et n sont indépendamment l'un de l'autre choisis parmi 0 et un nombre naturel entre 1 et 9 et n + m est un nombre naturel entre 1 et 9 ; et
R¹ est n'importe quel radical à l'exception de l'hydrogène, de préférence est un groupe stériquement volumineux.

15. Copolymère selon la revendication 1, **caractérisé en ce que** le polyamide modifié est de formule générale V 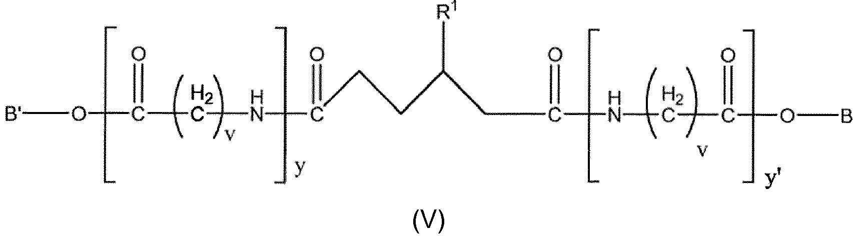 , dans lequel
B et B' indépendamment l'un de l'autre sont choisis parmi H ou un alkyle en C_{1 à 4} ;
v est un nombre naturel entre 1 et 24 ;
y est un nombre naturel ≥1
y' est un nombre naturel ≥1 ou 0 ;
R¹ est choisi parmi un halogène ; un radical aliphatique en C_{1 à 6} ramifié ou linéaire, saturé ou non saturé, éventuellement substitué ; un aryle éventuellement substitué ; un cycloalkyle en C_{3 à 10} saturé ou non saturé, éventuellement substitué ; un hétérocyclyle éventuellement substitué.

16. Copolymère selon l'une quelconque des revendications 14 ou 15, dans lequel le polyamide modifié est un composé selon les formules IV ou V, dans lequel
B et B' sont l'hydrogène ;
et/ou
v est un nombre naturel entre 3 et 13, de préférence est un nombre naturel entre 5 et 11 ; de préférence est 5, 10 ou 11, plus préférablement est 5 ou 11, le plus préférablement est 11 ;
et/ou
y' est 0 ;
et/ou
y + y' est compris entre 20 et 2000, de préférence 40 et 1000 ;
et/ou
R¹ est choisi parmi un halogène ; un radical alkyle en C1 à 4 ramifié ou linéaire, saturé ou non saturé, éventuellement substitué, de préférence est iso-propyle ou tert. butyle, plus préférablement est tert. butyle.

17. Dispositif à copolymère selon la revendication 16, dans lequel
v est 11 ;
et
R¹ est tert. butyle.

18. Dispositif à copolymère selon la revendication 1, dans lequel le polyéther est un polyéther diol de formule générale VI ou VIa 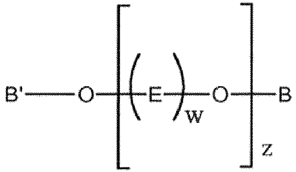 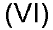 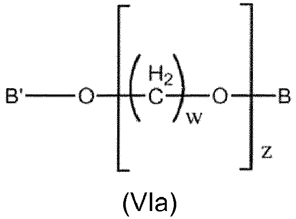 ou dans lequel le polyéther est une polyéther diamine de formule générale VII ou VIIa 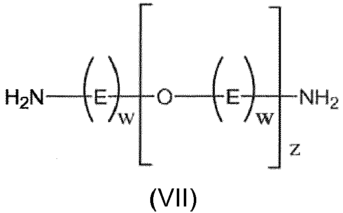 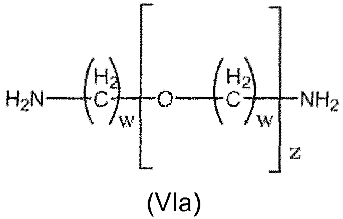 , dans lequel
E est une chaîne hydrocarbonée divalente, ramifiée ou linéaire, saturée ou non saturée, éventuellement substituée ;
B et B' indépendamment l'un de l'autre sont choisis parmi H ou un alkyle en C_{1 à 4} ;
w est un nombre naturel entre 1 et 24 ;
z est un nombre naturel ≥1.

19. Copolymère selon la revendication 18, dans lequel le polyéther est un diol de polyéther de formule générale VIa ou une polyéther diamine de formule générale VIIa, dans lequel
B et B' sont l'hydrogène ;
et/ou
w est un nombre naturel entre 1 et 10 ; de préférence, si z =1, w est un nombre naturel entre 1 et 10 et si z ≠1, w est un nombre naturel entre 2 et 10 ;
et/ou
z est un nombre naturel entre 1 et 2000, de préférence entre 2 et 2000, plus préférablement entre 1 et 1000.

20. Copolymère selon l'une quelconque des revendications 1 à 20, dans lequel
• soit la réaction menant au polyamide modifié ; soit
• la réaction de polymérisation ; soit
• l'une et l'autre des réactions
est/sont exécutée(s) en utilisant une extrusion réactive.

21. Copolymère selon la formule générale X, Xa, Xb, ou Xc, XI, XIa, XIb ou XIc 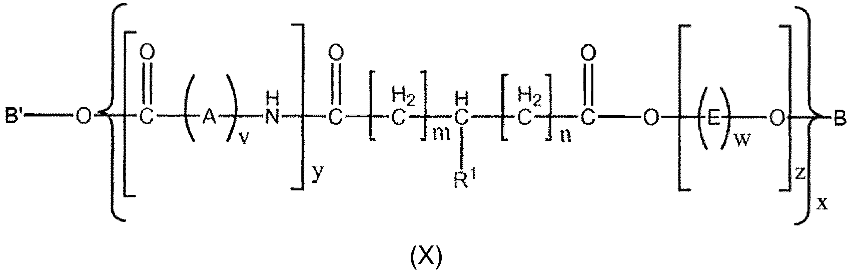 ou 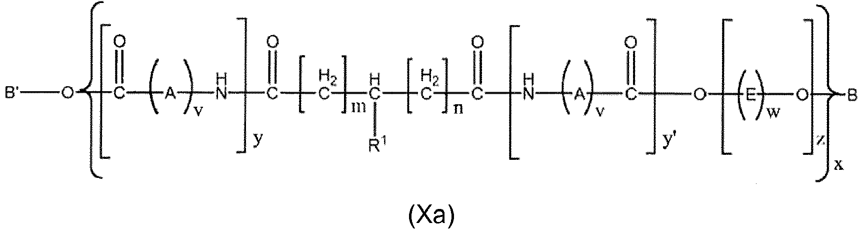 ou 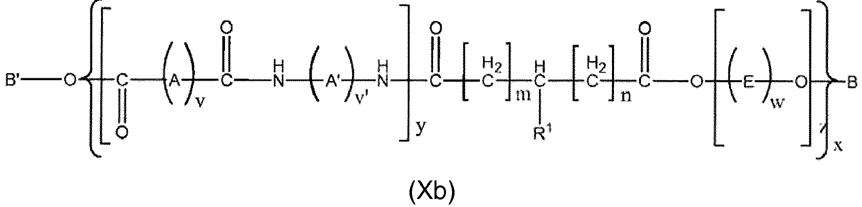 ou 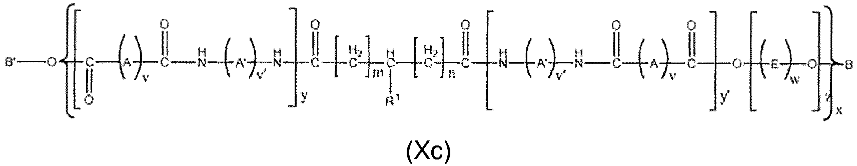 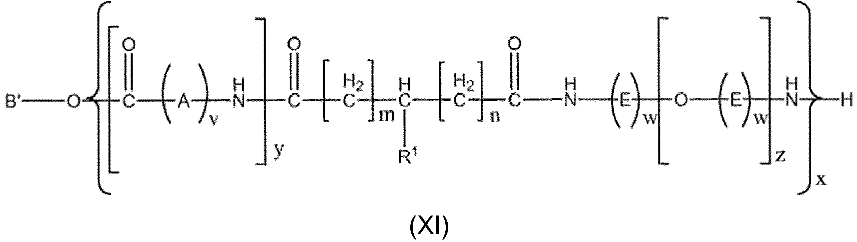 ou 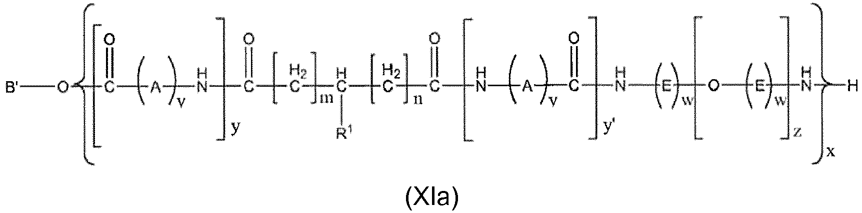 ou 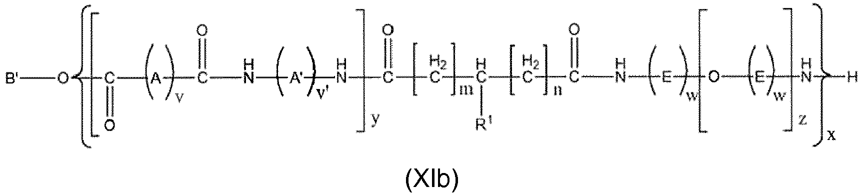 ou 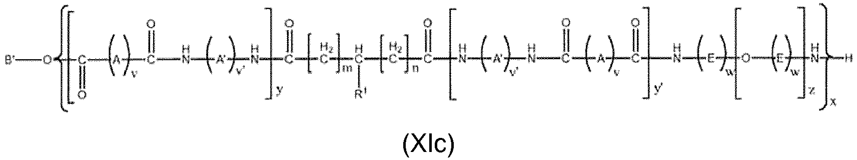 , dans lequel
A est une chaîne hydrocarbonée divalente, ramifiée ou linéaire, saturée ou non saturée, éventuellement substituée, avec éventuellement un atome de carbone étant remplacé par NH, O ou S ;
A' est une chaîne hydrocarbonée divalente, ramifiée ou linéaire, saturée ou non saturée, éventuellement substituée, avec éventuellement un atome de carbone étant remplacé par NH, O ou S ;
E est une chaîne hydrocarbonée divalente, ramifiée ou linéaire, saturée ou non saturée, éventuellement substituée ;
B et B' indépendamment l'un de l'autre sont choisis parmi H ou un alkyle en C_{1 à 4} ;
v est un nombre naturel entre 1 et 24 ;
v' est un nombre naturel entre 1 et 24 ;
w est un nombre naturel entre 1 et 24 ;
x est un nombre naturel ≥1 ;
y et y' indépendamment l'un de l'autre sont un nombre naturel ≥1 ;
z est un nombre naturel ≥1 ;
m et n sont indépendamment l'un de l'autre choisis parmi 0 et un nombre naturel entre 1 et 9 et n + m est un nombre naturel entre 1 et 9 ; et
R¹ est n'importe quel radical à l'exception de l'hydrogène, de préférence est un groupe stériquement volumineux.

22. Copolymère selon la revendication 21 de formule générale XII, ou XIIa ou XIII ou XIIIa 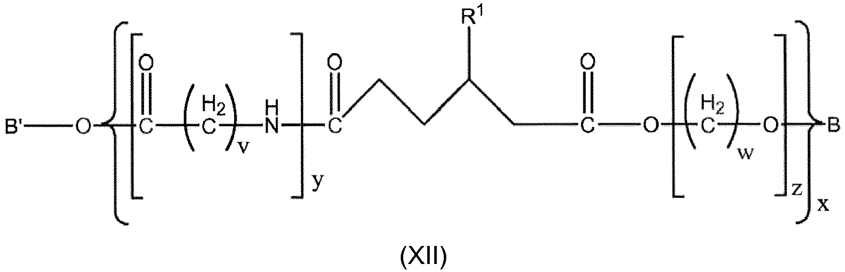 ou 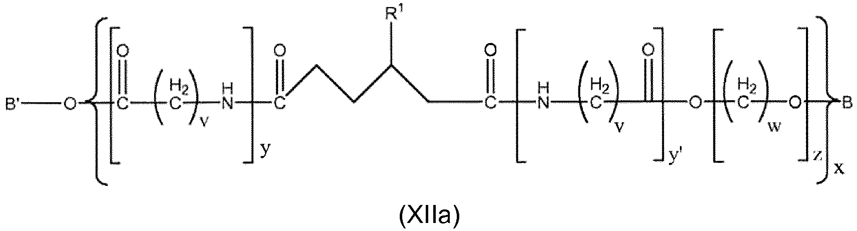 ou 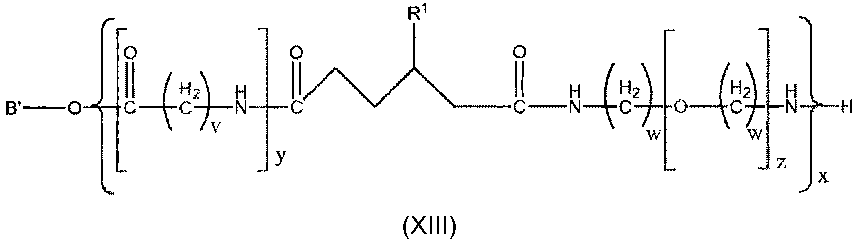 ou 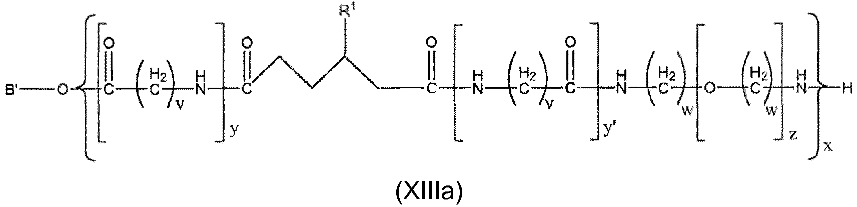 , dans lequel
B et B' indépendamment l'un de l'autre sont choisis parmi H ou un alkyle en C_{1 à 4} ;
v est un nombre naturel entre 1 et 24 ;
w est un nombre naturel entre 1 et 24 ;
x est un nombre naturel ≥1 ;
y et y' sont indépendamment l'un de l'autre un nombre naturel ≥1 ;
z est un nombre naturel ≥1 ;
R¹ est choisi parmi un halogène ; un radical aliphatique en C_{1 à 6} ramifié ou linéaire, saturé ou non saturé, éventuellement substitué ; un aryle éventuellement substitué ; un cycloalkyle en C_{3 à 10} saturé ou non saturé, éventuellement substitué ; un hétérocyclyle éventuellement substitué.

23. Copolymère selon l'une quelconque des revendications 21 ou 22, dans lequel
B et B' sont l'hydrogène ;
et/ou
v est un nombre naturel entre 3 et 13, de préférence est un nombre naturel entre 5 et 11 ; de préférence est 5, 10 ou 11, plus préférablement est 5 ou 11, le plus préférablement est 11 ;
et/ou
w est un nombre naturel entre 1 et 10 ; de préférence, si z =1, w est un nombre naturel entre 1 et 10 et si z ≠1, w est un nombre naturel entre 2 et 10 ;
et/ou
z est un nombre naturel entre 1 et 2000, de préférence entre 2 et 2000, plus préférablement entre 1 et 1000 ;
et/ou
y est un nombre naturel entre 1 et 2000, de préférence 2 et 1000, plus préférablement entre 2 et 200, encore plus préférablement entre 2 et 150, le plus préférablement entre 2 et 100 ;
et
y' est un nombre naturel entre 1 et 2000, de préférence 2 et 1000, plus préférablement entre 2 et 200, encore plus préférablement entre 2 et 150, le plus préférablement entre 2 et 100 ;
et
la somme de y + y' est un nombre naturel entre 1 et 2000, de préférence entre 2 et 1000, plus préférablement entre 2 et 200, encore plus préférablement entre 2 et 150, le plus préférablement entre 2 et 100 ;
et/ou
x est un nombre naturel entre 1 et 100 ; et/ou
R¹ est choisi parmi un halogène ; un radical alkyle en C_{1 à 4} ramifié ou linéaire, saturé ou non saturé, éventuellement substitué, de préférence est iso-propyle ou tert. butyle, plus préférablement est tert. butyle.

24. Copolymère selon la revendication 23, dans lequel
v est 11 ;
et
R¹ est tert. butyle.

25. Copolymère selon l'une quelconque des revendications 21 à 24, dans lequel le copolymère est modifié dans au moins un des groupes terminaux B avec des oligomères cristallins liquides (oligomères LCOs/LC).

26. Utilisation d'un copolymère selon l'une quelconque des revendications 1 à 20 ou 21 à 25 dans la production d'implant ou dispositifs médicaux, de préférence des dispositifs médicaux implantés ou implantables, plus préférablement pour la production de ballonnet/matériau de ballonnet, d'endoprothèses, d'endoprothèses couvertes, de greffes, de connecteurs de greffe ou de cathéters.

27. Implant ou dispositif médical comprenant un copolymère selon l'une quelconque des revendications 1 à 20 ou 21 à 25.

28. Implant selon la revendication 27, dans lequel l'implant ou le dispositif médical est choisi parmi des dispositifs médicaux implantés ou implantables, de préférence parmi un ballonnet/matériau de ballonnet, des endoprothèses, des endoprothèses couvertes, des greffes, des connecteurs de greffe ou des cathéters.
